(19)

Europäisches Patentamt

European Patent Office

Office européen des brevets

(11)  **EP 2 854 128 A1**

(12)  **EUROPEAN PATENT APPLICATION**

(43) Date of publication:
01.04.2015  Bulletin 2015/14

(51) Int Cl.:
*G10H 1/00* *(2006.01)*

(21) Application number: **14186150.0**

(22) Date of filing: **24.09.2014**

| | |
|---|---|
| (84) Designated Contracting States:<br>**AL AT BE BG CH CY CZ DE DK EE ES FI FR GB<br>GR HR HU IE IS IT LI LT LU LV MC MK MT NL NO<br>PL PT RO RS SE SI SK SM TR**<br>Designated Extension States:<br>**BA ME** | • **Leppänen, Jussi**<br>  **33580 Tampere (FI)**<br>• **Curcio, Igor**<br>  **33100 Tampere (FI)**<br>• **Roininen, Mikko**<br>  **33820 Tampere (FI)** |
| (30) Priority:  **27.09.2013  GB 201317204** | (74) Representative: **Nokia Corporation<br>Intellectual Property Department<br>Karakaari 7<br>02610 Espoo (FI)** |
| (71) Applicant: **Nokia Corporation<br>02610 Espoo (FI)** | |
| (72) Inventors:<br>• **Eronen, Antti<br>  33820 Tampere (FI)** | |

(54)  **Audio analysis apparatus**

(57)    An apparatus comprising: an analyser determiner configured to determine at least one sub-set of analysers, wherein the sub-set of analysers are determined from a set of possible analysers; at least one analyser module comprising the sub-set of analysers configured to analyse at least one audio signal to generate at least two analysis features; at least one predictor configured to determine from the at least two analysis features the presence or absence of at least one accentuated point within the at least one audio signal.

Figure 1

**Description**

<u>Field</u>

The present application relates to apparatus for analysing audio. The invention further relates to, but is not limited to, apparatus for analysing audio from mobile devices.

<u>Background</u>

Analysing audio content such as live recorded audio content is well known.

In professionally edited concert videos, the rhythm and content of the music is often extensively used as the basis of editing. Most music genres are characterized by repeating internal structure and accentuation of certain structural changes or rhythmically important points in the musical pieces. As an example of the latter property, the drummer might hit the crash cymbal at the beginning of the song chorus. In concert video editing these accentuations suit well as cues for switching between different recording angles, if temporally parallel videos are available from several cameras, or for performing other strong momentary editing operations such as triggering post-processing effects. This creates a strong aesthetic connection between the music content and the editing. Automatic detection of these accentuation points can make automatic concert video editing seem more hand-made and professional.

The estimation of the tempo (or beats per minute, bpm) of songs, especially from live performances, can be difficult. BPM estimation is traditionally done by analysing an audio recording of the performance. The quality of the estimation depends on the quality of the recorded audio. In scenarios, such as those encountered in concerts, the audio quality recorded might not be of very high quality due to the audio recording technology sometimes present in mobile devices, or due to a non optimal recording position. Also the acoustic characteristics of various concert venues can have an effect on the recorded audio and thus will have an effect on the BPM estimation.

<u>Summary</u>

Aspects of this application thus provide suitable audio analysis to permit better audio and audio-visual experiences.

There is provided according to a first aspect an apparatus comprising at least one processor and at least one memory including computer code for one or more programs, the at least one memory and the computer code configured to with the at least one processor cause the apparatus to at least: determine at least one subset of analysers, wherein the sub-set of analysers are determined from a set of possible analysers; analyse at least one audio signal using the at least one subset of analysers to generate at least two analysis features; determine from the at least two analysis features the presence or absence of at least one accentuated point within the at least one audio signal.

Determining at least one sub-set of analysers may cause the apparatus to: analyse at least one annotated audio signal using the set of possible analysers to determine at least two training analysis features; determine from the at least two training analysis features at least one accentuated point within the at least one annotated audio signal; search for the at least one sub-set of analysers by comparing the at least at least one accentuated point within the at least one annotated audio signal with at least one annotated audio signal annotations.

Searching for the at least one sub-set of analysers may cause the apparatus to apply a sequential forward floating selection search.

Applying a sequential forward floating selection search may cause the apparatus to generate an optimization criteria comprising a combination of a fused prediction F-score for the positive class and difficulty in the form of identified accentuated points.

Analysing at least one audio signal using the at least one sub-set of analysers to generate at least two analysis features may cause the apparatus to control the operation of the set of analysers to activate only the at least one sub-set of analysers to generate at least two analysis features.

Analysing at least one audio signal using the at least one sub-set of analysers to generate at least two analysis features may cause the apparatus to generate at least two features from: at least one music meter analysis feature; at least one audio energy onset feature; at least one music structure feature; at least one audio change feature.

Determining from the at least two analysis features the presence or absence of at least one accentuated point within the at least one audio signal may cause the apparatus to: generate a support vector machine predictor sub-set comprising the determined at least two analysis features; generate a prediction of the presence or absence of the at least one accentuated point within the at least one audio signal from a fusion of the support vector machine predictor sub-set comprising the determined at least two analysis features.

The apparatus may be further caused to perform at least one of: skip to the determined at least one accentuated point within the at least one audio signal during a playback of the at least one audio signal; skip to the determined at least one accentuated point within the at least one audio signal during a playback of an audio-video signal comprising the at least one audio signal; loop between at least two of the determined at least one accentuated point within the at least one audio signal during a playback of the at least one audio signal; loop between at least two of the determined at least one accentuated point within the at least one audio signal during a playback of an audio-video signal comprising the at least one audio signal; search for audio signals comprising a defined amount of accentuated points using the determined at least one accentuated point within the audio signal; search for further audio signals comprising a defined amount of accentuated points, wherein the defined amount of accentuated points is determined from the number or rate of accentuated points within the audio signal; search for further audio signals comprising a defined amount of accentuated points at a further defined time period within the further audio signal, wherein the defined amount of accentuated points within the further audio signal is determined from the number or rate of accentuated points within the audio signal at a similar time period within the audio signal.

According to a second aspect there is provided an apparatus comprising: means for determining at least one sub-set of analysers, wherein the sub-set of analysers are determined from a set of possible analysers; means for analysing at least one audio signal using the at least one sub-set of analysers to generate at least two analysis features; means for determining from the at least two analysis features the presence or absence of at least one accentuated point within the at least one audio signal.

The means for determining at least one sub-set of analysers may comprise: means for analysing at least one annotated audio signal using the set of possible analysers to determine at least two training analysis features; means for determining from the at least two training analysis features at least one accentuated point within the at least one annotated audio signal; means for searching for the at least one sub-set of analysers by comparing the at least at least one accentuated point within the at least one annotated audio signal with at least one annotated audio signal annotations.

The means for searching for the at least one sub-set of analysers may comprise means for applying a sequential forward floating selection search.

The means for applying a sequential forward floating selection search may comprise means for generating an optimization criteria comprising a combination of a fused prediction F-score for the positive class and difficulty in the form of identified accentuated points.

The means for analysing at least one audio signal using the at least one sub-set of analysers to generate at least two analysis features may comprise means for controlling the operation of the set of analysers to activate only the at least one sub-set of analysers to generate at least two analysis features.

The means for analysing at least one audio signal using the at least one sub-set of analysers to generate at least two analysis features may comprise means for generating at least two features from: at least one music meter analysis feature; at least one audio energy onset feature; at least one music structure feature; at least one audio change feature.

The means for determining from the at least two analysis features the presence or absence of at least one accentuated point within the at least one audio signal may comprise: means for generating a support vector machine predictor sub-set comprising the determined at least two analysis features; means for generating a prediction of the presence or absence of the at least one accentuated point within the at least one audio signal from a fusion of the support vector machine predictor sub-set comprising the determined at least two analysis features.

The apparatus may further comprise at least one of: means for skipping to the determined at least one accentuated point within the at least one audio signal during a playback of the at least one audio signal; means for skipping to the determined at least one accentuated point within the at least one audio signal during a playback of an audio-video signal comprising the at least one audio signal; means for looping between at least two of the determined at least one accentuated point within the at least one audio signal during a playback of the at least one audio signal; means for looping between at least two of the determined at least one accentuated point within the at least one audio signal during a playback of an audio-video signal comprising the at least one audio signal; means for searching for audio signals comprising a defined amount of accentuated points using the determined at least one accentuated point within the audio signal; means for searching for further audio signals comprising a defined amount of accentuated points, wherein the defined amount of accentuated points is determined from the number or rate of accentuated points within the audio signal; means for searching for further audio signals comprising a defined amount of accentuated points at a further defined time period within the further audio signal, wherein the defined amount of accentuated points within the further audio signal is determined from the number or rate of accentuated points within the audio signal at a similar time period within the audio signal.

According to a third aspect there is provided a method comprising: determining at least one sub-set of analysers, wherein the sub-set of analysers are determined from a set of possible analysers; analysing at least one audio signal using the at least one sub-set of analysers to generate at least two analysis features; determining from the at least two analysis features the presence or absence of at least one accentuated point within the at least one audio signal.

Determining at least one sub-set of analysers may comprise: analysing at least one annotated audio signal using the set of possible analysers to determine at least two training analysis features; determining from the at least two training analysis features at least one accentuated point within the at least one annotated audio signal; searching for the at least one sub-set of analysers by comparing the at least at least one accentuated point within the at least one annotated audio signal with at least one annotated audio signal annotations.

Searching for the at least one sub-set of analysers may comprise applying a sequential forward floating selection search.

Applying a sequential forward floating selection search may comprise generating an optimization criteria comprising a combination of a fused prediction F-score for the positive class and difficulty in the form of identified accentuated points.

Analysing at least one audio signal using the at least one sub-set of analysers to generate at least two analysis features may comprise controlling the operation of the set of analysers to activate only the at least one sub-set of analysers to generate at least two analysis features.

Analysing at least one audio signal using the at least one sub-set of analysers to generate at least two analysis features may comprise generating at least two features from: at least one music meter analysis feature; at least one audio energy onset feature; at least one music structure feature; at least one audio change feature.

Determining from the at least two analysis features the presence or absence of at least one accentuated point within the at least one audio signal may comprise: generating a support vector machine predictor sub-set comprising the determined at least two analysis features; generating a prediction of the presence or absence of the at least one accentuated point within the at least one audio signal from a fusion of the support vector machine predictor sub-set comprising the determined at least two analysis features.

The method may further comprise at least one of: skipping to the determined at least one accentuated point within the at least one audio signal during a playback of the at least one audio signal; skipping to the determined at least one accentuated point within the at least one audio signal during a playback of an audio-video signal comprising the at least one audio signal; looping between at least two of the determined at least one accentuated point within the at least one audio signal during a playback of the at least one audio signal; looping between at least two of the determined at least one accentuated point within the at least one audio signal during a playback of an audio-video signal comprising the at least one audio signal; searching for audio signals comprising a defined amount of accentuated points using the determined at least one accentuated point within the audio signal; searching for further audio signals comprising a defined amount of accentuated points, wherein the defined amount of accentuated points is determined from the number or rate of accentuated points within the audio signal; searching for further audio signals comprising a defined amount of accentuated points at a further defined time period within the further audio signal, wherein the defined amount of accentuated points within the further audio signal is determined from the number or rate of accentuated points within the audio signal at a similar time period within the audio signal.

According to a fourth aspect there is provided an apparatus comprising: an analyser determiner configured to determine at least one sub-set of analysers, wherein the sub-set of analysers are determined from a set of possible analysers; at least one analyser module comprising the sub-set of analysers configured to analyse at least one audio signal to generate at least two analysis features; at least one predictor configured to determine from the at least two analysis features the presence or absence of at least one accentuated point within the at least one audio signal.

The analyser determiner may be configured to: receive at least two training analysis features from the set of possible analysers configured to analyse at least one annotated audio signal; determine from the at least two training analysis features at least one accentuated point within the at least one annotated audio signal; search for the at least one sub-set of analysers by comparing the at least at least one accentuated point within the at least one annotated audio signal with at least one annotated audio signal annotations.

The analyser module may comprise a sequential forward floating searcher configured to apply a sequential forward floating selection search.

The sequential forward floating searcher may be configured to generate an optimization criteria comprising a combination of a fused prediction F-score for the positive class and difficulty in the form of identified accentuated points.

The at least one analyser module may comprise an analyser controller configured to control the operation of the at least one analyser module to generate only the at least two analysis features.

The at least one analyser module may comprise at least two of: a music meter analyser; an audio energy onset analyser; a music structure analyser; an audio change analyser.

The at least one predictor may comprise: a vector generator configured to generate a support vector machine predictor sub-set comprising the determined at least two analysis features; a fuser configured to generate a prediction of the presence or absence of the at least one accentuated point within the at least one audio signal from a fusion of the support vector machine predictor sub-set comprising the determined at least two analysis features.

The apparatus may further comprise at least one of: an audio playback editor configured to skip to the determined at least one accentuated point within the at least one audio signal during a playback of the at least one audio signal; a video playback editor configured to skip to the determined at least one accentuated point within the at least one audio signal during a playback of an audio-video signal comprising the at least one audio signal; an audio playback looper configured to loop between at least two of the determined at least one accentuated point within the at least one audio signal during a playback of the at least one audio signal; a video playback looper configured to loop between at least two of the determined at least one accentuated point within the at least one audio signal during a playback of an audio-video signal comprising the at least one audio signal; an audio searcher configured to search for audio signals comprising a defined amount of accentuated points using the determined at least one accentuated point within the audio signal; an audio rate searcher configured to search for further audio signals comprising a defined amount of accentuated points, wherein the defined amount of accentuated points is determined from the number or rate of accentuated points within the audio signal; an audio part searcher configured to search for further audio signals comprising a defined amount of accentuated points at a further defined time period within the further audio signal, wherein the defined amount of accentuated points within the further audio signal is determined from the number or rate of accentuated points within the audio signal at a similar time period within the audio signal.

According to a fifth aspect there is provided an apparatus comprising at least one processor and at least one memory including computer code for one or more programs, the at least one memory and the computer code configured to with the at least one processor cause the apparatus to at least: determine at least one subset of analysers, wherein the sub-set of analysers are determined from a set of possible analysers; analyse at least one audio signal using the at least one subset of analysers to generate at least two analysis features; determine from the at least two analysis features at least one accentuated point within the at least one audio signal.

According to a sixth aspect there is provided an apparatus comprising: means for determining at least one sub-set of analysers, wherein the sub-set of analysers are determined from a set of possible analysers; means for analysing at least one audio signal using the at least one sub-set of analysers to generate at least two analysis features; means for determining from the at least two analysis features at least one accentuated point within the at least one audio signal.

According to a seventh aspect there is provided a method comprising: determining at least one sub-set of analysers, wherein the sub-set of analysers are determined from a set of possible analysers; analysing at least one audio signal using the at least one sub-set of analysers to generate at least two analysis features; determining from the at least two analysis features at least one accentuated point within the at least one audio signal.

According to an eighth aspect there is provided an apparatus comprising: an analyser determiner configured to determine at least one sub-set of analysers, wherein the sub-set of analysers are determined from a set of possible analysers; at least one analyser module comprising the sub-set of analysers configured to analyse at least one audio signal to generate at least two analysis features; at least one predictor configured to determine from the at least two analysis features at least one accentuated point within the at least one audio signal.

A computer program product stored on a medium may cause an apparatus to perform the method as described herein.

An electronic device may comprise apparatus as described herein.

A chipset may comprise apparatus as described herein.

Embodiments of the present application aim to address problems associated with the state of the art.

Summary of the Figures

For better understanding of the present application, reference will now be made by way of example to the accompanying drawings in which:

Figure 1 shows schematically an apparatus suitable for being employed in some embodiments;
Figure 2 shows schematically an example analysis apparatus according to some embodiments;
Figure 3 shows a flow diagram of the operation of the example analysis apparatus shown in Figure 2;
Figure 4 shows schematically an analyser module as shown in Figure 2 in further detail according to some embodiments;
Figure 5 shows schematically a predictor module and training module as shown in

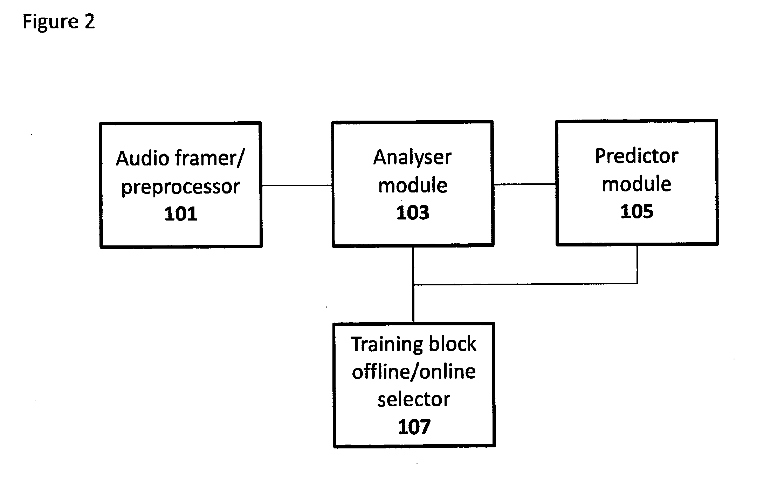

Figure 2 in further detail according to some embodiments;

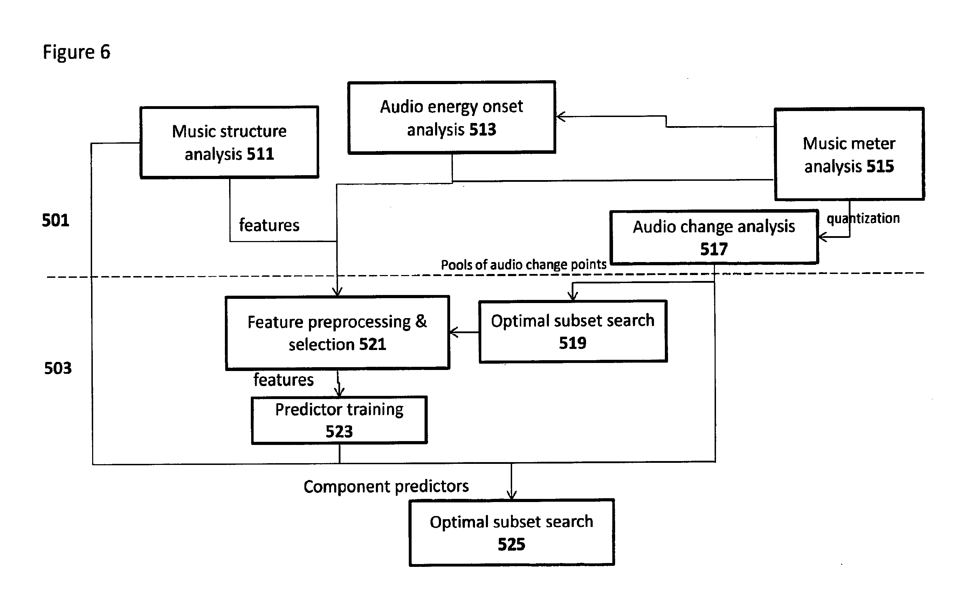

Figure 6 shows a flow diagram of the analysis apparatus operating in an offline or training mode of operation according to some embodiments;

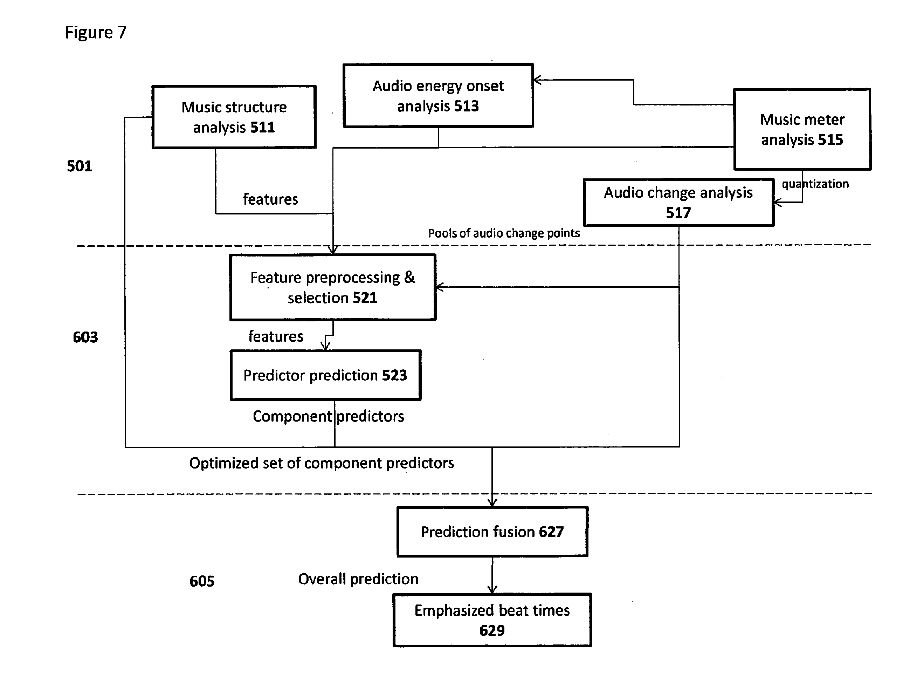

Figure 7 shows a flow diagram of the analysis apparatus operating in an online or predictor mode of operation according to some embodiments;

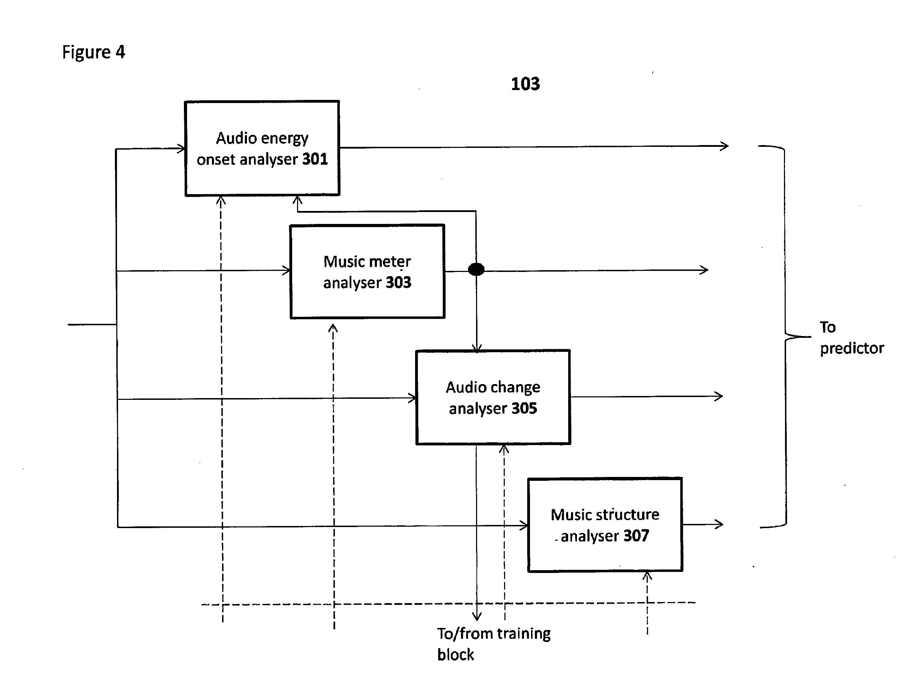

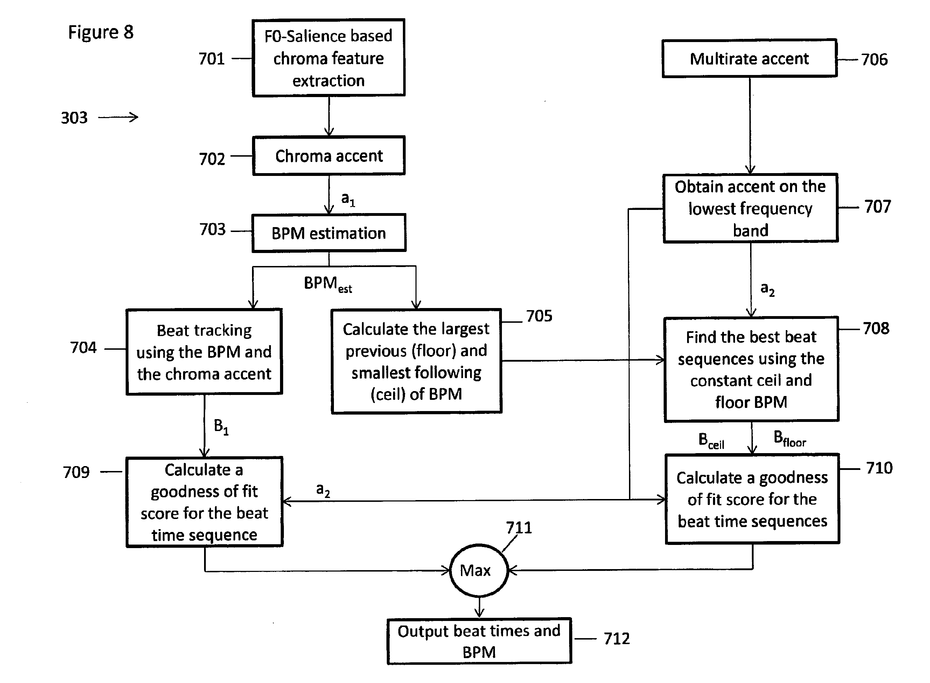

Figure 8 shows schematically a music meter analyser as shown in Figure 4 according to some embodiments;

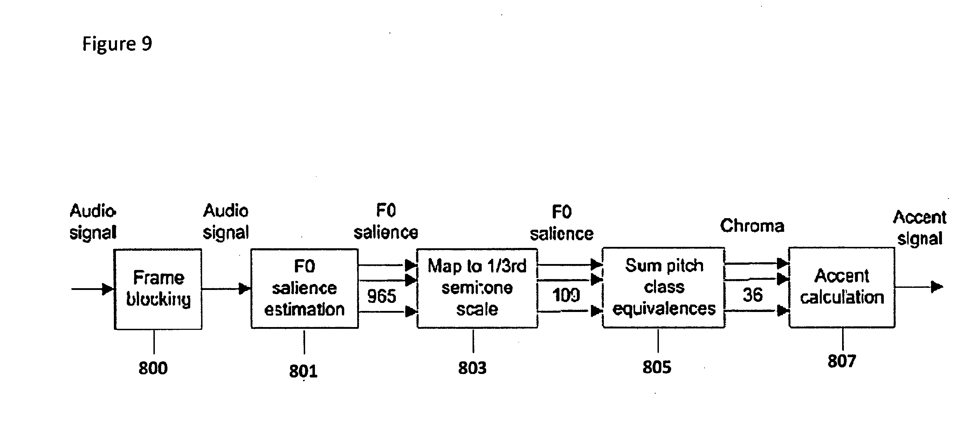

Figure 9 shows a flow diagram of a chroma accent signal generation method as employed in the music meter analyser as shown in Figure 8 according to some embodiments;

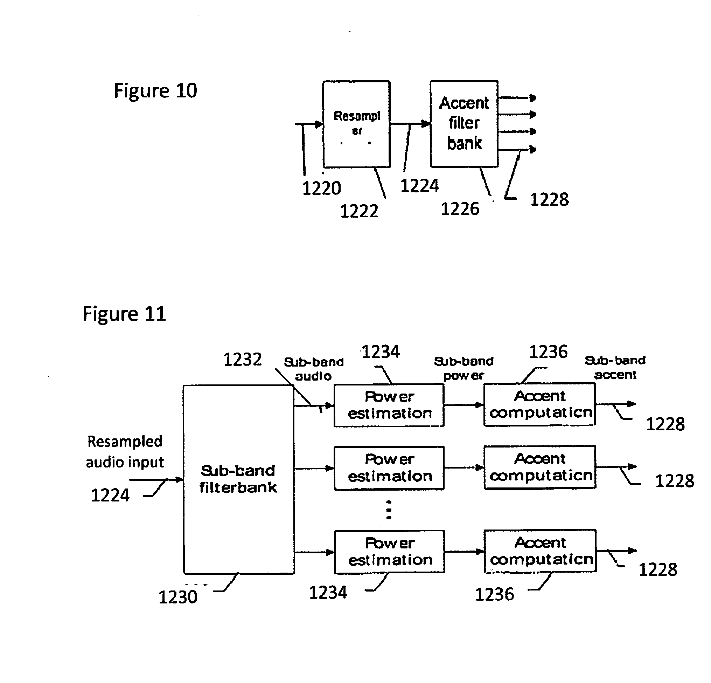

Figure 10 shows schematically a multirate accent signal generator as employed in the music meter analyser as shown in Figure 8 according to some embodiments;
Figure 11 shows schematically an accent filter bank as employed in the multirate accent signal generator as shown in Figure 10 according to some embodiments;

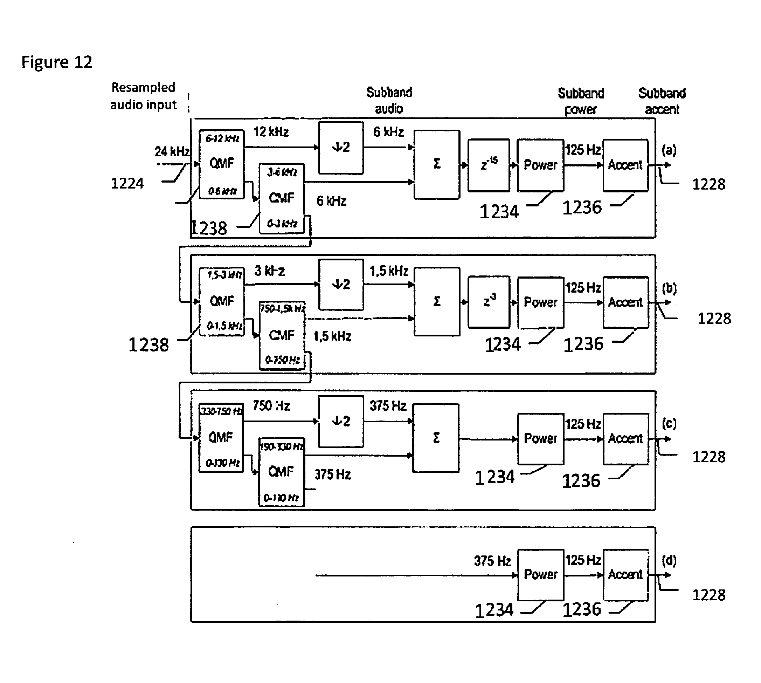

Figure 12 shows schematically the accent filter bank as employed in the multirate accent signal generator as shown in Figure 11 in further detail according to some embodiments;

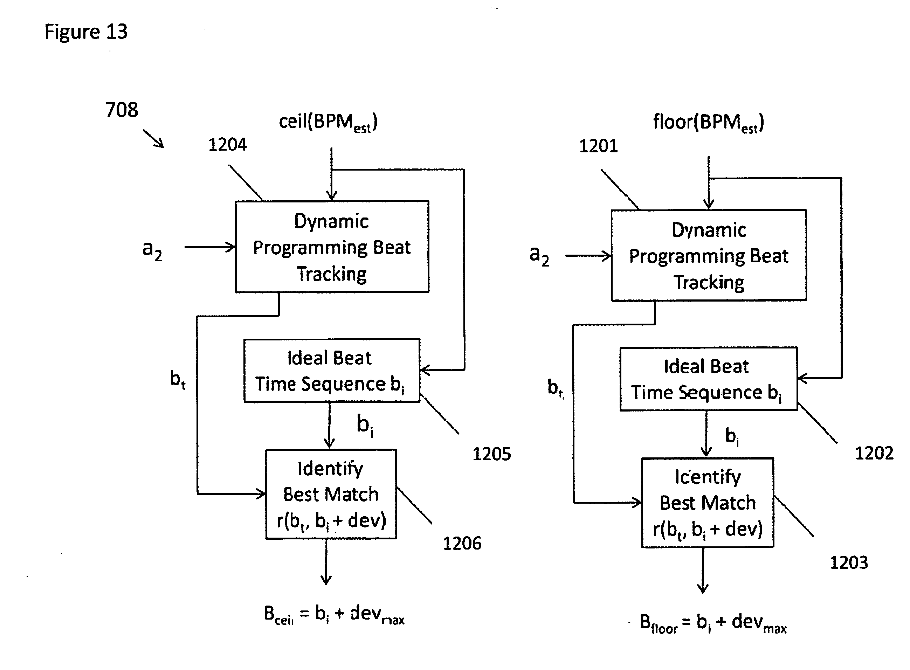

Figure 13 shows a flow diagram showing the operation of the further beat tracker;

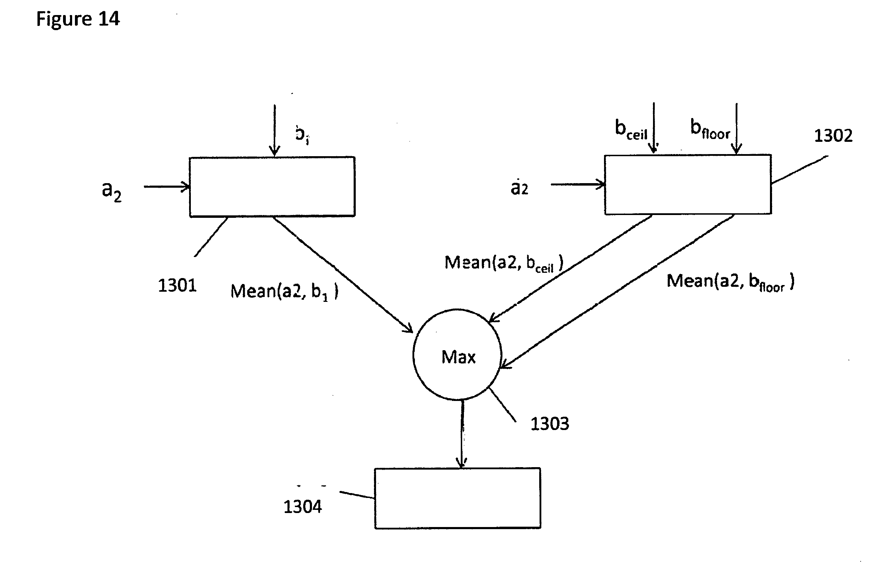

Figure 14 shows a fit determiner for generating a goodness of fit score according to some embodiments;

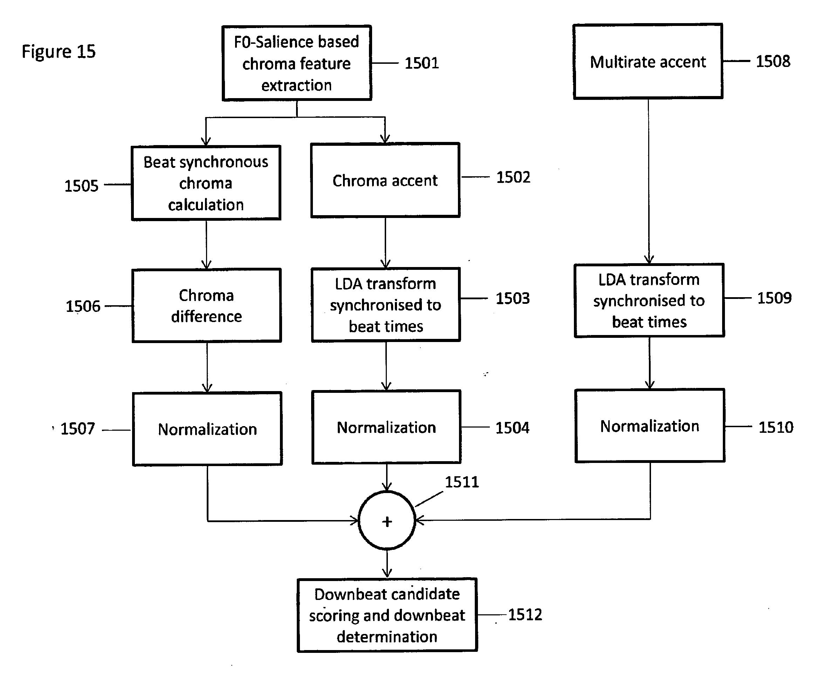

Figure 15 shows a flow diagram showing the generation of a downbeat candidate scoring and downbeat determination operation according to some embodiments;

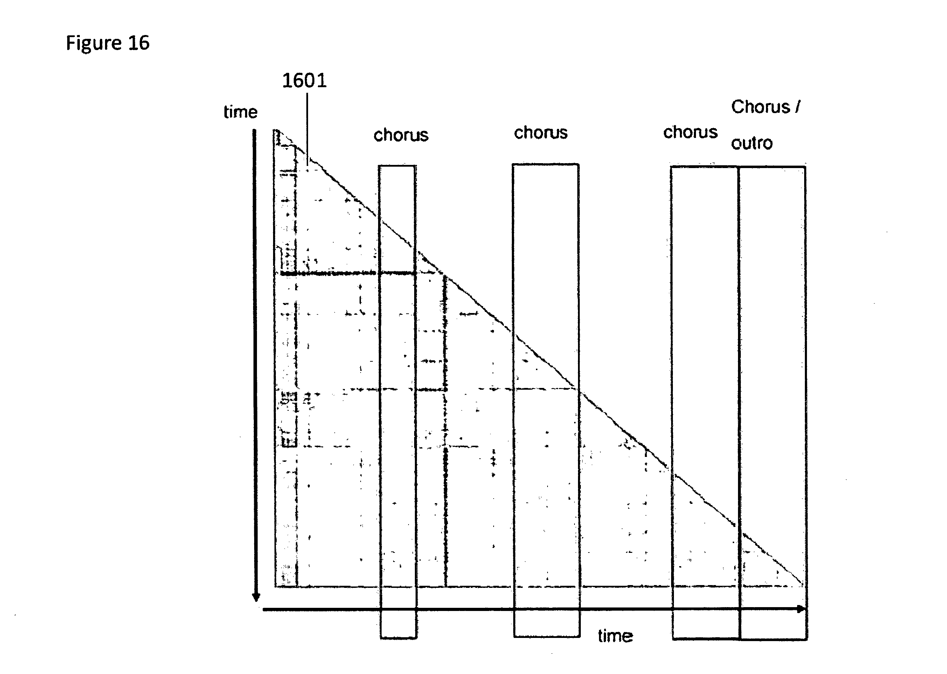

Figure 16 shows an example self-distance matrix for a music audio signal;

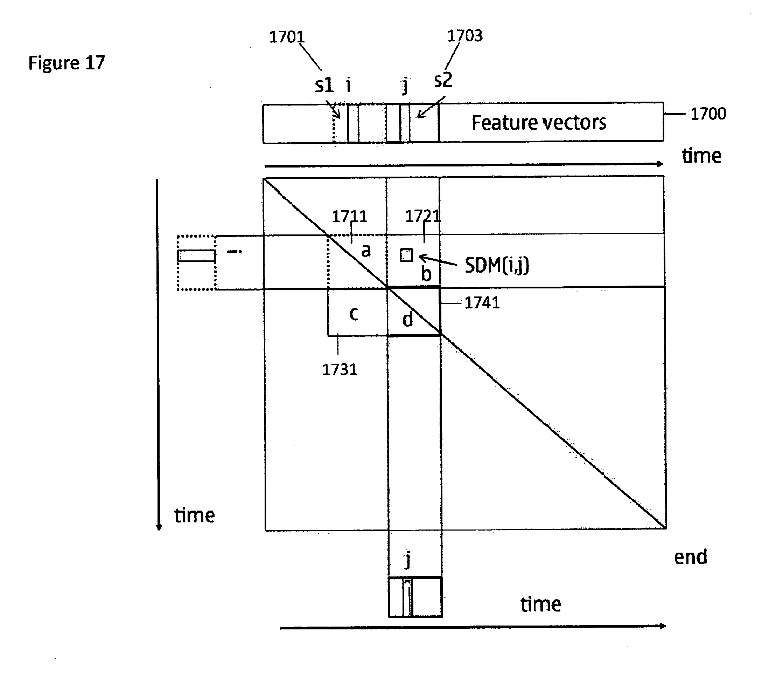

Figure 17 shows a further example self-distance matrix for a music audio signal; and

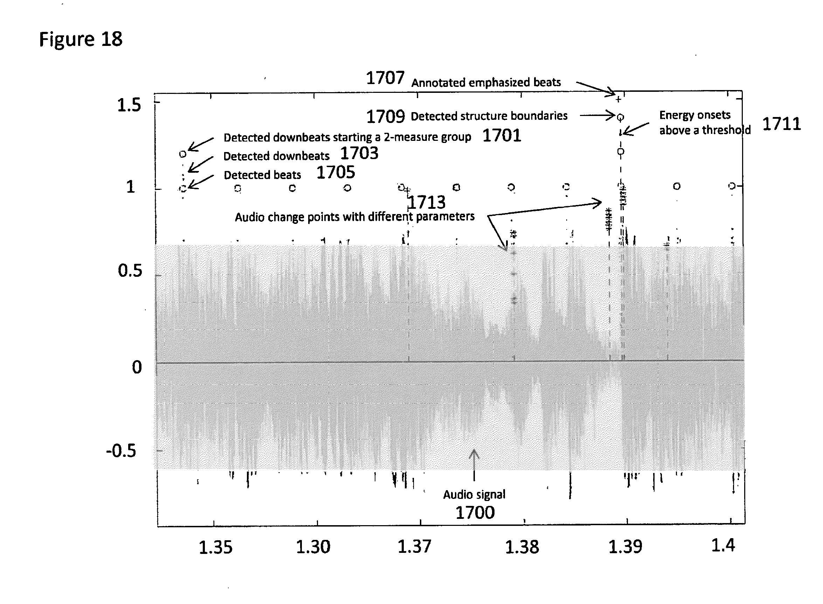

Figure 18 shows an example annotated audio signal.

Embodiments of the Application

The following describes in further detail suitable apparatus and possible mechanism for the provision of effective audio signal analysis and in particular analysis to determine suitable accentuated points in music. In the following examples, audio signals and audio capture signals are described. However it would be appreciated that in some embodiments the audio signal/audio capture is a part of an audio-video system.

The concept of this application is related to assisting the determination of suitable perceptually important accentuated points in music or audio signals. In the application described herein the audio signals can be captured or recorded by microphones from a live event. For example the live event could be an orchestral performance, a popular music concert, a DJ set, or any event where audio signals can be captured from the environment by more than one apparatus. It would be understood however that in some embodiments the teachings of the application can be furthermore applied to 'non-live' or pre-recorded events. Furthermore, in some embodiments the teachings of the application can be applied to audio captured by a single apparatus or any single audio signal. For example in some embodiments the accentuated point determination can be based on a broadcast audio signal such as a radio or television event being replayed by the apparatus. In such embodiments the apparatus in the group receives the audio signal, for example via a data network communication or from a conventional FM or AM radio signal, rather than from a microphone or microphone array.

The concept as described by the embodiments herein is to find emphasized beats in a song using a combination of two or more of the following analyzers: energy onsets analyzer, song structure analyzer, audio change point analyzer, and a beat-, bar- and two-bar grouping-analyzer. The estimated emphasized beats can then in turn be used to improve the human feel of automatic music video editing systems by applying shot switches on the emphasized beats alone or in combination with known methods such as learned switching patterns, song structure, beats, or audio energy onsets. The emphasized beats can also be used as further cues for making various other editing choices, for example triggering post-processing and transition effects, or choosing shot sizes or camera operations from the set of available source videos.

The determined combination or selection of analyzers can in some embodiments be learned or taught from a hand-annotated concert recording dataset which is employed within an offline training phase. In addition to concert recordings, the method as described in embodiments herein could be used for non-live music or identification of other types of beats as well given an appropriate annotated dataset.

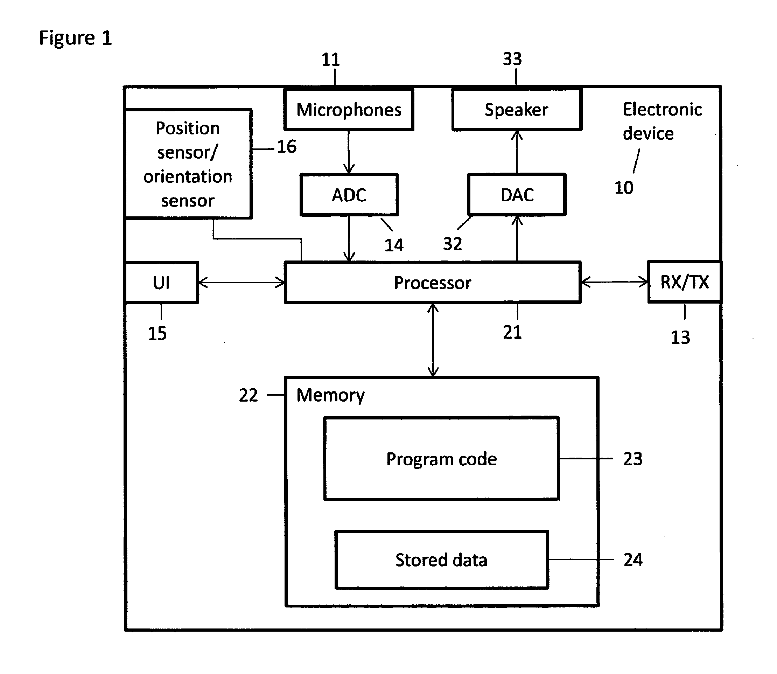

In this regard reference is first made to Figure 1 which shows a schematic block diagram of an exemplary apparatus or electronic device 10, which may operate as the user equipment 19.

The electronic device 10 may for example be a mobile terminal or user equipment of a wireless communication system. In some embodiments the apparatus can be an audio player or audio recorder, such as an MP3 player, a media recorder/player (also known as an MP4 player), or any suitable portable device suitable for recording audio or audio/video camcorder/memory audio or video recorder.

The apparatus 10 can in some embodiments comprise an audio subsystem. The audio subsystem for example can comprise in some embodiments a microphone or array of microphones 11 for audio signal capture. In some embodiments the microphone or array of microphones can be a solid state microphone, in other words capable of capturing audio signals and outputting a suitable digital format signal. In some other embodiments the microphone or array of microphones 11 can comprise any suitable microphone or audio capture means, for example a condenser microphone, capacitor microphone, electrostatic microphone, electret condenser microphone, dynamic microphone, ribbon microphone, carbon microphone, piezoelectric microphone, or microelectrical-mechanical system (MEMS) microphone. The microphone 11 or array of microphones can in some embodiments output the audio captured signal to an analogue-to-digital converter (ADC) 14.

In some embodiments the apparatus can further comprise an analogue-to-digital converter (ADC) 14 configured to receive the analogue captured audio signal from the microphones and outputting the audio captured signal in a suitable digital form. The analogue-to-digital converter 14 can be any suitable analogue-to-digital conversion or processing means.

In some embodiments the apparatus 10 audio subsystem further comprises a digital-to-analogue converter 32 for converting digital audio signals from a processor 21 to a suitable analogue format. The digital-to-analogue converter (DAC) or signal processing means 32 can in some embodiments be any suitable DAC technology.

Furthermore the audio subsystem can comprise in some embodiments a speaker 33. The speaker 33 can in some embodiments receive the output from the digital-to-analogue converter 32 and present the analogue audio signal to the user. In some embodiments the speaker 33 can be representative of a headset, for example a set of headphones, or cordless headphones.

Although the apparatus 10 is shown having both audio capture and audio playback components, it would be understood that in some embodiments the apparatus 10 can comprise one or the other of the audio capture and audio playback parts of the audio subsystem such that in some embodiments of the apparatus the microphone (for audio capture) or the speaker (for audio playback) are present.

In some embodiments the apparatus 10 comprises a processor 21. The processor 21 is coupled to the audio subsystem and specifically in some examples the analogue-to-digital converter 14 for receiving digital signals representing audio signals from the microphone 11, and the digital-to-analogue converter (DAC) 12 configured to output processed digital audio signals. The processor 21 can be configured to execute various program codes. The implemented program codes can comprise for example audio signal processing routines.

In some embodiments the apparatus further comprises a memory 22. In some embodiments the processor is coupled to memory 22. The memory can be any suitable storage means. In some embodiments the memory 22 comprises a program code section 23 for storing program codes implementable upon the processor 21. Furthermore in some embodiments the memory 22 can further comprise a stored data section 24 for storing data, for example data that has been processed in accordance with the application or data to be processed via the application embodiments as described later. The implemented program code stored within the program code section 23, and the data stored within the stored data section 24 can be retrieved by the processor 21 whenever needed via the memory-processor coupling.

In some further embodiments the apparatus 10 can comprise a user interface 15. The user interface 15 can be coupled in some embodiments to the processor 21. In some embodiments the processor can control the operation of the user interface and receive inputs from the user interface 15. In some embodiments the user interface 15 can enable a user to input commands to the electronic device or apparatus 10, for example via a keypad, and/or to obtain information from the apparatus 10, for example via a display which is part of the user interface 15. The user interface 15 can in some embodiments comprise a touch screen or touch interface capable of both enabling information to be entered to the apparatus 10 and further displaying information to the user of the apparatus 10.

In some embodiments the apparatus further comprises a transceiver 13, the transceiver in such embodiments can be coupled to the processor and configured to enable a communication with other apparatus or electronic devices, for example via a wireless communications network. The transceiver 13 or any suitable transceiver or transmitter and/or receiver means can in some embodiments be configured to communicate with other electronic devices or apparatus via a wire or wired coupling.

The transceiver 13 can communicate with further devices by any suitable known communications protocol, for example in some embodiments the transceiver 13 or transceiver means can use a suitable universal mobile telecommunications system (UMTS) protocol, a wireless local area network (WLAN) protocol such as for example IEEE 802.X, a suitable short-range radio frequency communication protocol such as Bluetooth, or infrared data communication pathway (IRDA).

In some embodiments the apparatus comprises a position sensor 16 configured to estimate the position of the apparatus 10. The position sensor 16 can in some embodiments be a satellite positioning sensor such as a GPS (Global Positioning System), GLONASS or Galileo receiver.

In some embodiments the positioning sensor can be a cellular ID system or an assisted GPS system.

In some embodiments the position sensor 16 comprises a direction or orientation sensor. The orientation/direction sensor can in some embodiments be an electronic compass, an accelerometer, a gyroscope or be determined by the motion of the apparatus using the positioning estimate.

It is to be understood again that the structure of the electronic device 10 could be supplemented and varied in many ways.

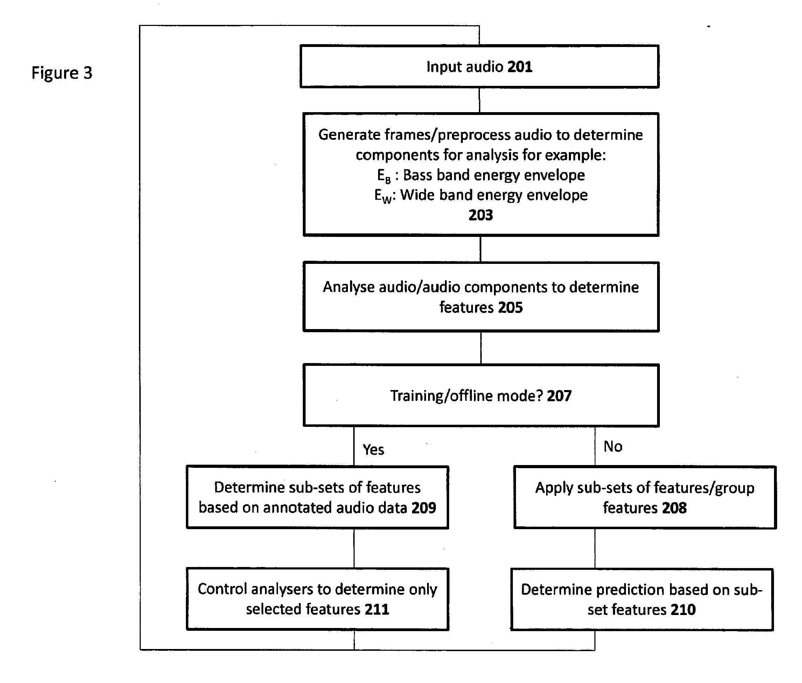

With respect to Figure 2 an example analyser is shown. Furthermore with respect to Figure 3 a flowchart describing the operation of the analyser shown in Figure 2 is described in further detail.

In some embodiments the analyser comprises an audio framer/pre-processor 101. The analyser or audio framer/pre-processor 101 can be configured to receive an input audio signal or music signal.

The operation of inputting the audio signal is shown in Figure 3 by step 201.

For example in some embodiments the audio framer/pre-processor 101 can be configured to receive the audio signal and segment or generate frames from the audio signal data. The frames can be any suitable length and can in some embodiments be separate or be at least partially overlapping with preceding or succeeding frames. In some embodiments the audio framer/pre-processor can furthermore apply a windowing function to the frame audio signal data.

Furthermore in some embodiments the audio frames can be time to frequency domain transformed, filtered, the frequency domain powers mapped onto the mel scale using triangular overlapping windows, and logs of the resultant powers at each of the mel frequencies taken to determine Mel filter bank energies. In some embodiments the lowest Mel band is taken as the base band energy envelope $E_B$ and the sum of all Mel bands taken as a wideband energy envelope Ew value respectively. It would be understood that in some embodiments other suitable processing of the audio signal to determine components to be analysed can be determined and passed to the analyser module 103.

The audio frames and pre-processed components can be passed to the analyser module 103.

The operation of generating frames of audio signals and pre-processing the audio to determine components for analysis is shown in Figure 3 by step 203.

In some embodiments the analyser comprises an analyser module 103. The analyser module 103 can in some embodiments be configured to receive the audio signal in the form of frames or any suitable pre-processed component for analysis from the audio frame/pre-processor 101. Furthermore the analyser module 103 can in some embodiments be configured to receive at least one control input from a training block or module 107. The training block or module can be configured to control which analysers within the analyser module are active and the degree of combination of the output of the analysers within the analyser module 103.

The analyser module 103 can in some embodiments be configured to analyse the audio signal or the audio components to determine audio features. In some embodiments the analyser module 103 can be configured to comprise at least two of the following: an audio energy onset analyser, a music meter analyser, an audio change analyser, and a music structure analyser.

The analyser module 103 can be configured to output these determined audio features to at least one of a training block module 107 and/or the predictor module 105.

The operation of analysing the audio/audio components to generate features is shown in Figure 3 by step 205.

In some embodiments the analyser module 103 can direct the determined audio features to either the predictor module 105 or the training block 107 based on whether the analyser is operating in a training (or off-line) mode or in a predictor (or on-line) mode.

The operation of determining whether the analyser is operating in a training (or off-line) mode is shown in Figure 3 by step 207.

Where the analyser is operating in a training (or off-line) mode then the determined audio features can be passed to the training block 107.

In some embodiments the analyser comprises a training block or module 107. The training block/module 107 can be configured to receive the determined audio features from the analyser module 103 when the analyser is operating in a training (or off-line) mode.

The training block/module 107 can then be configured to determine which sub-sets and the combination of which sub-sets of the features produce a good prediction of the annotated emphasised beats or accentuation point based on the training or annotated audio data being processed. For example in some embodiments the input audio data comprises a metadata component where the emphasised beats or accentuation points have been predetermined such that the features can be searched which when selected enable the predictor to generate accurate estimates for the emphasised beats or accentuation points of other data.

In some embodiments the training block/module 107 is configured to determine the prediction for the emphasised beats or accentuation points, however it would be understood that in some embodiments the training block/module 107 is configured to control the predictor module 105 and receive the output of the predictor module 105 in the training mode to determine the feature sub-set.

The operation of determining subsets of features based on the allocated audio data is shown in Figure 3 by step 209.

The training block/module 107 can furthermore be configured to output control information or data based on these determine subsets to control the analyser module 103 and/or the predictor module 105 to employ (or select or combine) the determined feature sub-sets (in a suitable combination) when the analyser is operating in a predictor (or online mode).

The operation of controlling the analyser module to determine any selected features is shown in Figure 3 by step 211.

In some embodiments the analyser comprises a predictor module 105. The predictor module 105 can be configured to receive the determined audio features. The predictor module 105 can therefore be configured to either have selected for it or select itself the determined sub-set of audio features based on the audio feature subsets determined in the training mode.

The operation of applying the audio feature sub-sets determined by the training mode is shown in Figure 3 by step 208.

The predictor module 105 can then be configured to determine a prediction based on the received subset features in order to estimate within the audio signal where there are emphasised beats or accentuation points.

The determination of the prediction based on the sub-set audio features is shown in Figure 3 by step 210.

With respect to Figure 4 the analyser module 103 as shown in Figure 2 according to some embodiments is shown in further detail. In some embodiments the analyser module 103 comprises at least two of the following analyser components.

In some embodiments the analyser module 103 comprises an audio energy onset analyser 301. The audio energy onset analyser 301 can be configured to receive the frame audio signals components and in some embodiments furthermore an input from the music meter analyser 303 and determine suitable audio features.

From the logarithms of Mel filter bank energies from frames of audio data, the bass-band energy envelope $E_B$ and wide-band energy envelope $E_W$, respectively, are extracted. Onset features with the following operators and filters are determined.

$$f_j^0 = r(\Delta E_j),$$

where r or Half-wave rectification is defined as

$$r(x) = \frac{(x + |x|)}{2}.$$

and where $j \in \{B,W\}$. $f_j^0$ is the onset curve of the logarithmic energy envelopes, and its peaks correlate with note onsets.

$$f_j^1 = (r(\Delta(E_j * h_{LI}))) * h_{mean},$$

where * is the convolution operator, and $\Delta$ is the finite difference operator, and for all the following filters, we define N, an odd positive integer, as the filter length for the following the mean filter:

$$h_{mean}(n) = \frac{1}{N}, \quad \lceil -N/2 \rceil \leq n \leq \lfloor N/2 \rfloor,$$

the leaky integrator filter:

$$h_{LI}(n) = (1 - \alpha)\alpha^n, \quad 0 \leq n < \infty, 0 \leq \alpha \leq 1,$$

The value of $f_j^1$ indicates the averaged positive changes of smoothed energy, and tends to respond strongly to energetic note onsets.

$$f_j^2 = (r(\Delta(max(E_j)))) * h_{mean},$$

The value of $f_j^2$ shows the average-smoothed positive changes of the maximum energy within a moving window.

$$f_j^3 = r(max(E_j) * h_{step}),$$

where additionally

$$h_{step}(n) = \begin{cases} \frac{1}{N}, & \lceil -N/2 \rceil \le n \le 0 \\ -\frac{1}{N}, & 0 < n \le \lfloor N/2 \rfloor \end{cases},$$

and

The value of $f_j^3$ shows the rectified step-filtered maximum energy. Both $f_j^2$ and $f_j^3$ give high response to the beginning of a high-energy section after a low-energy section.

$$f_j^4 = w_1 f_j^1 + w_2 f_j^2 + w_3 f_j^3,$$

where the weights in the compound feature $f_j^4$ are adjusted empirically. A fifth onset feature is

$$f_j^5 = ((E_j * h_{LoG}) \cdot E_j) * h_{mean},$$

where

$$h_{LoG}(n) = -\nabla^2(g(n)) = -g''(n),$$

$\nabla^2$ is the Laplace operator, and the negative sign makes the filter responsive for sudden energy peaks instead of drops in energy. The impulse response $g(n)$ of a Gaussian filter is calculated as

$$g(n) = \frac{1}{\sqrt{2\pi \cdot \sigma}} \cdot e^{-\frac{n^2}{2\sigma^2}}, \quad \lceil -N/2 \rceil \le n \le \lfloor N/2 \rfloor,$$

where $\sigma$ is the standard deviation of the Gaussian distribution. In these implementations the Laplacian of a Gaussian filter is derived from the Gaussian filter by taking the Laplacian of $g(n)$. In the discrete one-dimensional case this reduces to the second order difference of $g(n)$ as described herein. The value of $f_j^5$ is the energy weighted by its Laplacian of Gaussian filtered counterpart and smoothed with average filtering.

In some embodiments, other features describing the onset of notes and other musical accentuations can be used instead of or in combination with the aforementioned features. Examples of such features are given for instance in: Bello, J.P.; Daudet, L.; Abdallah, S.; Duxbury, C.; Davies, M.; Sandler, Mark B., "A Tutorial on Onset Detection in Music Signals," Speech and Audio Processing, IEEE Transactions on, vol.13, no.5, pp.1035,1047, Sept. 2005 doi: 10.1109/TSA.2005.851998.

In some embodiments the onset audio features are aggregated for each detected beat time by calculating the average value of each feature from a smoothed window centered around the beat. The window size is dynamically set as the time difference between two closest consecutive detected beats.

In some embodiments the audio analyser comprises a music meter analyser 303 configured to receive the audio signals.

The music meter analyser 303 can in some embodiments be configured to determine beats, downbeats, and 2-measure groupings. It would be understood that the music meter analyser 303 can be configured to determine the beats, downbeats and 2-measure groupings according to any suitable method.

With respect to Figure 8 an example flow diagram of the determination of the beat times and beats per minute or tempo is shown.

In the example flow diagram there are shown two processing paths, starting from steps 801 and 806. The reference numerals applied to each processing stage are not indicative of order of processing. Furthermore it would be understood that in some implementations, the processing paths may be performed in parallel allowing fast execution. In this example implementation three beat time sequences are generated from an inputted audio signal, specifically from accent signals derived from the audio signal. A selection stage then identifies which of the three beat time sequences is a best match or fit to one of the accent signals, this sequence being considered the most useful and accurate for the determination of beat tracking.

In some embodiments the music meter analyser 303 is configured to determine or calculate a first accent signal ($a_1$) based on fundamental frequency ($F_0$) salience estimation. Thus in some embodiments the music meter analyser 303 can be configured to determine a fundamental frequency ($F_0$) salience estimate.

The operation of determining a fundamental frequency ($F_0$) salience estimate is shown in Figure 8 by step 701.

The music meter analyser 303 can then in some embodiments be configured to determine the chroma accent signal from the fundamental frequency ($F_0$) salience estimate.

The operation of determining the chroma accent signal from the fundamental frequency ($F_0$) salience estimate is shown in Figure 8 by step 702.

The accent signal ($a_1$), which is a chroma accent signal, can in some embodiments be extracted or determined in a manner such as determined in Eronen, A. and Klapuri, A., "Music Tempo Estimation with k-NN regression," IEEE Trans. Audio, Speech and Language Processing, Vol. 18, No. 1, Jan 2010. The chroma accent signal ($a_1$) can be considered to represent musical change as a function of time and, because it is extracted based on the $F_0$ information, it emphasizes harmonic and pitch information in the signal. It would be understood that in some embodiments instead of calculating a chroma accent signal based on $F_0$ salience estimation, alternative accent signal representations and calculation methods could be used. For example, the accent signals described in Klapuri, A., Eronen, A., Astola, J., " Analysis of the meter of acoustic musical signals ," IEEE Trans. Audio, Speech, and Language Processing, Vol. 14, No. 1, 2006 could be utilized.

With respect to Figure 9 a flow diagram shows in further detail the determination of the first accent signal calculation method according to some embodiments. The first accent signal calculation method uses chroma features. It would be understood that the extraction of chroma features can be performed by employing various methods including, for example, a straightforward summing of Fast Fourier Transform bin magnitudes to their corresponding pitch classes or using a constant-Q transform. However in the following example a multiple fundamental frequency ($F_0$) estimator is employed to calculate the chroma features.

In some embodiments the audio signal is framed or blocked prior to the determination of the $F_0$ estimation. For example the input audio signal can be sampled at a 44.1 kHz sampling rate and have a 16-bit resolution. In the following examples the frames employ 93-ms frames having 50% overlap.

The frame blocking or input frame operation is shown in Figure 9 by step 800.

The $F_0$ salience estimator then can be configured in some embodiments to spectrally whiten the signal frame, and then estimates the strength or salience of each $F_0$ candidate. The $F_0$ candidate strength is calculated as a weighted sum of the amplitudes of its harmonic partials. In some embodiments the range of fundamental frequencies used for the estimation is 80-640 Hz. The output of the F0 salience estimator is, for each frame, a vector of strengths of fundamental frequency candidates.

The operation of generating a $F_0$ salience estimate is shown in Figure 9 by step 801.

In some embodiments the fundamental frequencies ($F_0$) are represented on a linear frequency scale. However in some embodiments to better suit music signal analysis, the fundamental frequency saliences are mapped or transformed on a musical frequency scale. In particular in some embodiments the mapping is performed onto a frequency scale having a resolution of $1/3^{rd}$-semitones, which corresponds to having 36 bins per octave. For each 1/3rd of a semitone range, the system finds the fundamental frequency component with the maximum salience value and retains only that.

The operation of mapping the estimate to a $1/3^{rd}$ semitone scale is shown in Figure 9 by step 803.

The mapped frequencies or octave equivalence classes can then in some embodiments be summed over the whole pitch range in order to obtain a 36-dimensional chroma vector $x_b(k)$, where $k$ is the frame index and $b=1,2,...,bo$ is the pitch class index, with $b_0=36$. A normalized matrix of chroma vectors $\hat{x}_b(k)$ can then be obtained by subtracting the mean and dividing by the standard deviation of each chroma coefficient over the frames $k$.

The summing of pitch class equivalences is shown in Figure 9 by step 805.

The estimation of the musical accent using the normalized chroma matrix $\hat{x}_b(k)$, k=1,...,K and b=1,2,..., $b_0$ can be determined by applying the method described in Klapuri, A., Eronen, A., Astola, J., " Analysis of the meter of acoustic musical signals ," IEEE Trans. Audio, Speech, and Language Processing, Vol. 14, No. 1, 2006 but using pitch classes instead of frequency bands.

In some embodiments to improve the time resolution, the time trajectories of chroma coefficients can be first interpolated by an integer factor. For example in some embodiments a factor eight interpolation can be employed. Thus in some embodiments a straightforward method of interpolation by adding zeros between samples can be used. Using the above example values after the interpolation a resulting sampling rate $f_r$ = 172 Hz is generated. The interpolated values can then in smoothed in some embodiments by applying a low pass filter, for example a sixth-order Butterworth low-pass filter (LPF) with cut-off frequency of $f_{LP}$ = 10Hz. The signal after smoothing can be denoted as $z_b(n)$.

The accent calculator in some embodiments performs a differential calculation and half-wave rectification (HWR). This can mathematically be represented as:

$$\dot{z}_b(n) = HWR(z_b(n) - z_b(n-1))$$

with $HWR(x) = \max(x,0)$.

The accent calculator then can in some embodiments perform a weighted average of $z_b(n)$ and its half-wave rectified differential $\dot{z}_b(n)$. The resulting weighted average signal can in some embodiments be represented as:

$$u_b(n) = (1 - \rho)z_b(n) + \rho\frac{f_r}{f_{LP}}\dot{z}_b(n)\,.$$

where the factor $0 \le \rho \le 1$ controls the balance between $z_b(n)$ and its half-wave rectified differential. In some embodiments the value p can be chosen such that $\rho=0.6$. In some embodiments the accent signal $a_1$ is then determined based on the determined accent signal analysis by linearly averaging the bands $b$. The accent signal represents the amount of musical emphasis or accentuation over time.

The operation of determining an accent calculation/determination is shown in Figure 9 by step 807.

The accent signal then can in some embodiments be passed to a bpm estimator or tempo estimator configured to determine a beats per minute or tempo estimation. The estimation of the audio signal tempo (which is defined hereafter as "$BPM_{est}$") can in some embodiments be performed according to any suitable method.

In some embodiments the first step in tempo estimation is to perform a periodicity analysis. The periodicity analysis, can in some embodiments be performed by a periodicity analyser or means for performing analysis of the periodicity of the accent signal ($a_1$). In some embodiments the periodicity analyser generates a periodicity estimation based on the generalized autocorrelation function (GACF). To obtain periodicity estimates at different temporal locations of the signal, the GACF is calculated in successive frames. For example in some embodiments frames of audio signals can be input to the periodicity estimator where the length of the frames is W and there is 16% overlap between adjacent frames. In some embodiments the framed audio signals employ no windowing. For a $m$th frame, the input vector for the GACF is denoted $a_m$ and can be mathematically defined as:

$$a_m = \left[a_1\big((m-1)W\big), \ldots, a_1(mW-1), 0, \ldots, 0\right]^T$$

where T denotes transpose. In such embodiments the input vector can be zero padded to twice its length, thus, the GACF input vector length is 2$W$. The GACF can in some embodiments be defined as:

$$\gamma_m(\tau) = \text{IDFT}(|\text{DFT}(a_m)|^p)$$

where the discrete Fourier transform and its inverse are denoted by DFT and IDFT, respectively. The amount of frequency domain compression is controlled using the coefficient $p$. The strength of periodicity at period (lag) $\tau$ is given by $\gamma_m(\tau)$.

In some other embodiments the periodicity estimator can employ for example, inter onset interval histogramming, autocorrelation function (ACF), or comb filter banks. It would be understood that in some embodiments the conventional ACF can be obtained by setting p=2 in the above GACF determination. The parameter $p$ in some embodiments can be changed to attempt to optimize the output for different accent features. This can for example be obtained by experimenting with different values of $p$ and evaluating the accuracy of periodicity estimation. The accuracy evaluation can be done, for example, by evaluating the tempo estimation accuracy on a subset of tempo annotated data. The value which leads to the best accuracy can then be selected to be used. In the example chroma accent features described herein the value $p$=0.65 was found to perform well.

The periodicity estimator can therefore output a sequence of periodicity vectors from adjacent frames. In some embodiments to obtain a single representative tempo for a musical piece or a segment of music, a point-wise median of the periodicity vectors over time can be calculated. The median periodicity vector may be denoted by $\gamma_{med}(\tau)$. Furthermore in some embodiments the median periodicity vector can be normalized to remove a trend

$$\hat{\gamma}_{med}(\tau) = \frac{1}{W - \tau}\gamma_{med}(\tau).$$

The trend can be caused by the shrinking window for larger lags. In some embodiments a sub-range of the periodicity vector can be selected as the final periodicity vector. The sub-range can, for example, in some embodiments be the range of bins corresponding to periods from 0.06 to 2.2 s. Furthermore in some embodiments the final periodicity vector can be normalized by removing the scalar mean and normalizing the scalar standard deviation to unity for each periodicity vector. The periodicity vector after normalization is can be denoted by $s(\tau)$. It would be understood that instead of taking a median periodicity vector over time, the periodicity vectors in frames could be outputted and subjected to tempo estimation separately.

In some embodiments the tempo estimator generates a tempo estimate based on the periodicity vector $s(\tau)$. The tempo estimate is determined in some embodiments using k-Nearest Neighbour regression. In some embodiments the tempo estimate can employ any other suitable method, such as finding the maximum periodicity value, possibly weighted by the prior distribution of various tempos.

For example where the unknown tempo of a periodicity vector is designated T. The tempo estimation can in such embodiments start with the generation of resampled test vectors $s_r(\tau)$. In such embodiments r denotes the resampling ratio. The resampling operation may be used to stretch or shrink the test vectors, which has in some cases been found to improve results. Since tempo values are continuous, such resampling can increase the likelihood of a similarly shaped periodicity vector being found from the training data. A test vector resampled using the ratio *r* will correspond to a tempo of T/*r*. A suitable set of ratios can be, for example, 57 linearly spaced ratios between 0.87 and 1.15. The resampled test vectors correspond to a range of tempos from 104 to 138 BPM for a musical excerpt having a tempo of 120 BPM.

The tempo estimator can thus in some embodiments generate a tempo estimate based on calculating the Euclidean distance between each training vector $t_m(\tau)$ and the resampled test vectors $s_r(\tau)$

$$d(m,r) = \sqrt{\sum_{\tau}(t_m(\tau) - s_r(\tau))^2}.$$

In the determination above, $m = 1, ..., M$ is the index of the training vector. For each training instance *m*, the minimum distance $d(m)=\min_r d(m,r)$ can be stored. Furthermore in some embodiments the resampling ratio that leads to the minimum distance $\hat{r}(m) = ar\,gimn,d(m,r)$ can be stored. The tempo can then be estimated based on the *k* nearest neighbours that lead to the *k* lowest values of *d(m)*. The reference or annotated tempo corresponding to the nearest neighbour *i* is denoted by $T_{ann}(i)$. An estimate of the test vector tempo is obtained as $\hat{T}(i) = T_{ann}(i)\hat{r}(i)$.

The tempo estimate can in some embodiments be obtained as the average or median of the nearest neighbour tempo estimates $\hat{T}(i), i = 1,....,k$. Furthermore, weighting can in some embodiments be used in the median calculation to give more weight to those training instances that are closest to the test vector. For example, weights $w_i$ can be calculated as

$$w_i = \frac{\exp(-\vartheta d(i))}{\sum_{i=1}^{k}\exp(-\vartheta d(i))},$$

where $i = 1,...,k$. The parameter $\vartheta$ can in some embodiments be used to control the steepness of the weighting. For example, the value $\vartheta=0.01$ can be used. The tempo estimate $BPM_{est}$ can then in some embodiments be calculated as a weighted median of the tempo estimates $\hat{T}(i), i = 1,..., k$, using the weights $w_i$.

The operation of determining the tempo estimate is shown in Figure 8 by step 703.

In some embodiments the music meter analyser comprises a beat tracker configured to receive the tempo estimate $BPM_{est}$ and the chroma accent signal $(a_1)$ and track the beat of the music. The result of this beat tracking is a first beat time sequence $(b_1)$ indicative of beat time instants. In some embodiments a dynamic programming method similar to that described in D. Ellis, "Beat Tracking by Dynamic Programming", J. New Music Research, Special Issue on Beat and Tempo Extraction, vol. 36 no. 1, March 2007, pp. 51-60. (10pp) DOI: 10.1080/09298210701653344 can be employed. Dynamic programming routines identify the first sequence of beat times (b1) which matches the peaks in the first chroma accent signal $(a_1)$ allowing the beat period to vary between successive beats. However in some embodiments alternative ways of obtaining the beat times based on a BPM estimate can be implemented, for example, by employing hidden Markov models, Kalman filters, or various heuristic approaches. The benefit of dynamic programming is that it effectively searches all possible beat sequences.

For example, the beat tracker can be configured to receive the $BPM_{est}$ from the tempo estimator and attempt to find a sequence of beat times so that many beat times correspond to large values in the first accent signal ($a_1$). In some embodiments the beat tracker smoothes the accent signal with a Gaussian window. The half-width of the Gaussian window can in some embodiments be set to be equal to 1/32 of the beat period corresponding to $BPM_{est}$.

After the smoothing, the dynamic programming routine proceeds forward in time through the smoothed accent signal values (a1). Where the time index is defined as n, the dynamic programmer for each index *n* finds the best predecessor beat candidate. The best predecessor beat is found inside a window in the past by maximizing the product of a transition score and a cumulative score. In other words the dynamic programmer can be configured to calculate $\delta(n) = max_l(ts(l) \cdot cs(n+l))$, where $ts(l)$ is the transition score and $cs(n+l)$ the cumulative score. The search window spans the range from $l$=-round(-2P), ..., - round(P/2), where P is the period in samples corresponding to $BPM_{est}$. The transition score can in some embodiments be defined as:

$$ts(l) = \exp\left(-0.5\left(\theta * \log\left(\frac{l}{-P}\right)\right)^2\right)$$

where $l$ = -round(-2P), ..., -round(P/2) and the parameter $\theta$=8 controls how steeply the transition score decreases as the previous beat location deviates from the beat period P. The cumulative score can in some embodiments be stored as $cs(n)=\alpha\delta(n) + (1- [\alpha)\alpha]_1(n)$. The parameter $\alpha$ can be used to keep a balance between past scores and a local match. The value $\alpha$=0.8 has been found to produce accurate results. The dynamic programmer furthermore in some embodiments also stores the index of the best predecessor beat as $b(n) = n + l$, where $i = argmax_l(ts(l) \cdot cs(n + l))$.

The beat tracker can in some embodiments be configured such that by the end of the musical excerpt the best cumulative score within one beat period from the end is chosen, and then the entire beat sequence $B_1$ which generated the score is traced back using the stored predecessor beat indices. The best cumulative score can be chosen as the maximum value of the local maxima of the cumulative score values within one beat period from the end. If such a score is not found, then the best cumulative score is chosen as the latest local maxima exceeding a threshold. The threshold here is 0.5 times the median cumulative score value of the local maxima in the cumulative score.

The operation of beat tracking is shown in Figure 8 by step 704.

In some embodiments the beat tracker output in the form of the beat sequence can be used to update the $BPM_{est}$. In some embodiments of the invention, the $BPM_{est}$ is updated based on the median beat period calculated based on the beat times obtained from the dynamic programming beat tracking step.

It would be understood that in some embodiments the value of $BPM_{est}$ is a continuous real value between a minimum BPM and a maximum BPM, where the minimum BPM and maximum BPM correspond to the smallest and largest BPM value which may be output. In this stage, minimum and maximum values of BPM are limited by the smallest and largest BPM value present in the training data of the k-nearest neighbours based tempo estimator.

In some embodiments the music meter analyser comprises a floor and ceiling tempo estimator. The floor and ceiling tempo estimator can in some embodiments receive the determined tempo calculations and determine the largest previous and the smallest following tempos.

The ceiling and floor functions give the nearest integer up and down, or the smallest following and largest previous integer, respectively. The output of the floor and ceiling tempo estimator is therefore two sets of data, denoted as floor($BPM_{est}$) and ceil($BPM_{est}$).

The estimation of the floor and ceiling tempo values is shown in Figure 8 by step 705.

The values of floor($BPM_{est}$) and ceil($BPM_{est}$) are can be output and used as the BPM value in the second processing path, in which beat tracking is performed on a bass accent signal, or an accent signal dominated by low frequency components, as described hereafter.

In some embodiments the music meter analyser comprises a multirate accent signal generator configured to generate a second accent signal ($a_2$). The second accent signal ($a_2$) is based on a computationally efficient multi rate filter bank decomposition of the signal. Compared to the $F_0$-salience based accent signal ($a_1$), the second accent signal ($a_2$) is generated in such a way that it relates more to the percussive and/or low frequency content in the input music signal and does not emphasize harmonic information.

The multirate accent signal generator thus in some embodiments can be configured to output a multi rate filter bank decomposition of the signal.

The generation of the multi-rate accent signal is shown in Figure 8 by step 706.

The multi-rate accent signal generator can furthermore comprise a selector configured to select the accent signal from the lowest frequency band filter so that the second accent signal ($a_2$) emphasizes bass drum hits and other low frequency events. In some embodiments a typical upper limit of this sub-band is 187.5 Hz or 200 Hz (This is as a result of the understanding that electronic dance music is often characterized by a stable beat produced by the bass drum).

Figures 10 to 12 show part of the method with respect to the parts relevant to obtaining the second accent signal ($a_2$) using multi rate filter bank decomposition of the audio signal.

With respect to Figure 10, part of a multi-rate accent signal generator is shown, comprising a re-sampler 1222 and an accent filter bank 1226. The re-sampler 1222 can in some embodiments re-sample the audio signal 1220 at a fixed sample rate. The fixed sample rate can in some embodiments be predetermined, for example, based on attributes of the accent filter bank 1226. As the audio signal 1220 is re-sampled at the re-sampler 1222, data having arbitrary sample rates may be fed into the multi-rate accent signal generator and converted to a sample rate suitable for use with the accent filter bank 1226 can be accomplished, since the re-sampler 1222 is capable of performing any necessary up-sampling or down-sampling in order to create a fixed rate signal suitable for use with the accent filter bank 1226. An output of the re-sampler 1222 can in some embodiments be considered as re-sampled audio input. Thus before any audio analysis takes place, the audio signal 1220 is converted to a chosen sample rate, for example, about a 20-30 kHz range, by the re-sampler 1222. In some embodiments a resampling of 24 kHz is employed. The chosen sample rate is desirable because the analysis occurs on specific frequency regions. Re-sampling can be done with a relatively low-quality algorithm such as linear interpolation, because high fidelity is not required for successful analysis. Thus, in general, any standard re-sampling method can be successfully applied.

The accent filter bank 1226 is in communication with the re-sampler 1222 to receive the re-sampled audio input 1224 from the re-sampler 1222. The accent filter bank 1226 implements signal processing in order to transform the re-sampled audio input 1224 into a form that is suitable for subsequent analysis. The accent filter bank 1226 processes the re-sampled audio input 1224 to generate sub-band accent signals 1228. The sub-band accent signals 1228 each correspond to a specific frequency region of the re-sampled audio input 1224. As such, the sub-band accent signals 1228 represent an estimate of a perceived accentuation on each sub-band. It would be understood that much of the original information of the audio signal 1220 is lost in the accent filter bank 1226 since the sub-band accent signals 1228 are heavily down-sampled.

Although Figure 12 shows four sub-band accent signals 1228, any number of sub-band accent signals 1228 can be generated. In these embodiments only the lowest sub-band accent signals are of interest.

An exemplary embodiment of the accent filter bank 1226 is shown in greater detail in Figure 11. However it would be understood that the accent filter bank 1226 could be implemented or embodied as any means or device capable of down-sampling input data. As referred to herein, the term down-sampling is defined as lowering a sample rate, together with further processing, of sampled data in order to perform a data reduction. As such, an exemplary embodiment employs the accent filter bank 1226, which acts as a decimating sub-band filter bank and accent estimator, to perform such data reduction. An example of a suitable decimating sub-band filter bank can for example include quadrature mirror filters as described below.

As shown in Figure 11, the re-sampled audio signal 1224 can be divided into sub-band audio signals 1232 by a sub-band filter bank 1230, and then a power estimate signal indicative of sub-band power is calculated separately for each band at corresponding power estimation elements 1234. Alternatively, in some embodiments a level estimate based on absolute signal sample values can be employed. A sub-band accent signal 1228 may then be computed for each band by corresponding accent computation elements 1236. Computational efficiency of beat tracking algorithms is, to a large extent, determined by front-end processing at the accent filter bank 1226, because the audio signal sampling rate is relatively high such that even a modest number of operations per sample will result in a large number operations per second. Therefore, in some embodiments the sub-band filter bank 1230 is implemented such that the sub-band filter bank can internally down sample (or decimate) input audio signals. Additionally, the power estimation provides a power estimate averaged over a time window, and thereby outputs a signal down sampled once again.

As stated above, the number of audio sub-bands can vary according to the embodiment. However, an exemplary embodiment having four defined signal bands has been shown in practice to include enough detail and provides good computational performance. In the current exemplary embodiment, assuming a 24 kHz input sampling rate, the frequency bands can be, for example, 0-187.5 Hz, 187.5-750 Hz, 750-3000 Hz, and 3000-12000 Hz. Such a frequency band configuration can be implemented by successive filtering and down sampling phases, in which the sampling rate is decreased by four in each stage. For example, in Figure 12, the stage producing sub-band accent signal (a) down-samples from 24 kHz to 6 kHz, the stage producing sub-band accent signal (b) down-samples from 6 kHz to 1.5 kHz, and the stage producing sub-band accent signal (c) down-samples from 1.5 kHz to 375 Hz. Alternatively other down-sampling can also be performed. Furthermore as analysis results are not in any way converted back to audio signals the actual quality of the sub-band signals is not important. Therefore, signals can be further decimated without taking into account aliasing that may occur when down-sampling to a lower sampling rate than would otherwise be allowable in accordance with the Nyquist theorem, as long as the metrical properties of the audio are retained.

Figure 12 shows an exemplary embodiment of the accent filter bank 1226 in greater detail. The accent filter bank 1226 divides the resampled audio signal 1224 to seven frequency bands (12 kHz, 6 kHz, 3 kHz, 1.5 kHz, 750 Hz, 375 Hz and 125 Hz in this example) by means of quadrature mirror filtering via quadrature mirror filters (QMF) 1238. Seven one-octave sub-band signals from the QMFs are combined in four two-octave sub-band signals (a) to (d). In this exemplary embodiment, the two topmost combined sub-band signals (in other words the pathways (a) and (b)) are delayed by 15 and 3 samples, respectively, (at z<-15 > and z<-3> , respectively) to equalize signal group delays across sub-bands. The power estimation elements 1234 and accent computation elements 1236 generate the sub-band accent signal 1228 for each sub-band.

The analysis requires only the lowest sub-band signal representing bass drum beats and/or other low frequency events in the signal. In some embodiments before outputting the accent signal, the lowest sub-band accent signal is optionally normalized by dividing the samples with the maximum sample value. It would be understood that other ways of normalizing, such as mean removal and/or variance normalization could be applied. The normalized lowest-sub band accent signal is output as $a_2$.

The operation of outputting the lowest sub-band or lowest frequency band is shown in Figure 8 by step 707.

In some embodiments the lowest frequency band accent signal can be passed to a further beat tracker. The further beat tracker can in some embodiments generate the second and third beat time sequences ($B_{ceil}$) ($B_{floor}$).

The further beat tracker can in some embodiments receive as inputs the second accent signal ($a_2$) and the values of floor($BPM_{est}$) and ceil($BPM_{est}$). The further beat tracker is employed as where the music is electronic dance music, it is quite likely that the sequence of beat times will match the peaks in ($a_2$) at either the floor($BPM_{est}$) or ceil($BPM_{est}$).

There are various ways to perform beat tracking using ($a_2$), floor($BPM_{est}$) and ceil($BPM_{est}$). In this case, the second beat tracking stage 708 is performed as follows.

With respect to Figure 13 the operations of the further beat tracker is shown (in other words the finding the best beat sequences using the constant ceiling and floor bpm determinations as shown in Figure 8 by step 708).

The operation of the further beat tracker configured to perform a dynamic programming beat tracking method is performed using the second accent signal ($a_2$) separately applied using each of floor($BPM_{est}$) and ceil($BPM_{est}$). This provides two processing paths shown in Figure 13, with the dynamic programming beat tracking steps being indicated by steps 1201 and 1204.

The following describes the process for just one path, namely that applied to floor($BPM_{est}$) but it will be appreciated that the same process is performed in the other path applied to ceil($BPM_{est}$). As before, the reference numerals relating to the two processing paths in no way indicate order of processing and it would be understood that in some embodiments that both paths can operate in parallel. The further beat tracker can in some embodiments determine an initial beat time sequence $b_t$ by employing dynamic programming beat tracking.

The operation of generating an initial beat time sequence is shown in Figure 13 by step 1201 for the floor($BPM_{est}$) pathway and step 1204 for the ceil($BPM_{est}$) pathway.

The further beat tracker can then in some embodiments calculate an ideal beat time sequence bi as:

$$b_i = 0,\ 1/\ (\text{floor}(BPM_{est})\ /\ 60),\ 2/\ (\text{floor}(BPM_{est})\ /\ 60),\ \ldots$$

The operation of generating an ideal beat time sequence is shown in Figure 13 by step 1202 for the floor($BPM_{est}$) pathway and step 1205 for the ceil($BPM_{est}$) pathway.

Next in some embodiments the further beat tracker can be configured to find a best match between the initial beat time sequence bt and the ideal beat time sequence bi when bi is offset by a small amount. For finding the match, we use a criterion for measuring the similarity of two beat time sequences. The score R(bt, bi + dev) is evaluated where R is the criterion for tempo tracking accuracy, and dev is a deviation ranging from 0 to *1.1*/ (floor($BPM_{est}$) / *60*) with steps of *0.1*/ (floor($BPM_{est}$) / *60*). It would be understood that the step is a parameter and can be varied. In Matlab language, the score R can be calculated as

```
function R=beatscore_cemgil(bt, at)
sigma_e=0.04; % expected onset spread
% match nearest beats
id=nearest(at(:)',bt(:));
% compute distances
d=at-bt(id);
% compute tracking index
s=exp(-d^2/(2*sigma_e^2));
R=2*sum(s)/(length(bt)+length(at));
```

The input 'bt' into the routine is bt, and the input 'at' at each iteration is bi + dev. The function 'nearest' finds the nearest values in two vectors and returns the indices of values nearest to 'at' in 'bt'. In Matlab language, the function can be presented as

```
function n = nearest(x,y)
% x row vector
% y column vector:
% indices of values nearest to x's in y
x = ones(size(y,1),1)*x;
[junk,n] = min(abs(x-y));
```

The output is the beat time sequence bi + $dev_{max}$, where $dev_{max}$ is the deviation which leads to the largest score R. It should be noted that scores other than R could be used here as well. It is desirable that the score measures the similarity of the two beat sequences.

The operation of find a best match between the initial beat time sequence bt and the ideal beat time sequence bi when bi is offset by a small amount is shown in Figure 13 by step 1203 for the floor($BPM_{est}$) pathway and step 1206 for the ceil($BPM_{est}$) pathway.

The output of the further beat tracker is in some embodiments the two beat time sequences: $B_{ceil}$ which is based on ceil($BPM_{est}$) and $B_{floor}$ based on floor($BPM_{est}$). It would be understood that in some embodiments that these beat sequences have a constant beat interval, in other words the period of two adjacent beats is constant throughout the beat time sequences.

The output of the beat tracker and the further beat tracker thus generate in some embodiments three beat time sequences:

$b_1$ based on the chroma accent signal and the real BPM value $BPM_{est}$;

$b_{ceil}$ based on ceil($BPM_{est}$); and

$b_{floor}$ based on floor($BPM_{est}$).

The music meter analyser furthermore then is configured to determine which of these best explains the accent signals obtained. In some embodiments the music meter comprise a fit determiner or suitable means configured to determine which of these best explains the accent signals. It would be understood that the fit determiner could use either or both of the accent signals $a_1$ or $a_2$. However in the following (and from observations) the fit determiner uses just $a_2$, representing the lowest band of the multi rate accent signal.

With respect to Figure 14 a fit determiner as employed in some embodiments is shown. In some embodiments the fit determiner comprises a first averager 1301 configured to calculate the mean of accent signal $a_2$ at times corresponding to the beat times in $b_1$ and a second averager 1302 configured to calculate the mean of accent signal $a_2$ at times corresponding to the beat times in, $b_{ceil}$, and $b_{floor}$.

The determination of the mean of accent signal a2 at times corresponding to the beat times in b1 is shown in Figure 8 by step 709.

The determination of the mean of accent signal a2 at times corresponding to the beat times in $b_{ceil}$ and $b_{floor}$ is shown in Figure 8 by step 710.

These are passed to a comparator 1303 which determines whichever beat time sequence gives the largest mean value of the accent signal $a_2$ and selects it as an indication of the best match as the output beat time sequence.

The operation of selecting the max mean is shown in Figure 8 by step 711.

Although the fit determiner here uses the mean or average, other measures such as geometric mean, harmonic mean, median, maximum, or sum could be used in some embodiments.

In some embodiments a small constant deviation of maximum +/- ten-times the accent signal sample period is allowed in the beat indices when calculating the average accent signal value. That is, when finding the average score, the system iterates through a range of deviations, and at each iteration adds the current deviation value to the beat indices and calculates and stores an average value of the accent signal corresponding to the displaced beat indices. In the end, the maximum average value is found from the average values corresponding to the different deviation values, and outputted. This operation is optional, but has been found to increase the robustness since with the help of the deviation it is possible to make the beat times to match with peaks in the accent signal more accurately. Furthermore in some embodiments the individual beat indices in the deviated beat time sequence may be deviated as well. In this case, each beat index is deviated by maximum of -/+ one sample, and the accent signal value corresponding to each beat is taken as the maximum value within this range when calculating the average. This allows for accurate positions for the individual beats to be searched. This step has also been found to slightly increase the robustness of the method.

Intuitively, the final scoring step performs matching of each of the three obtained candidate beat time sequences $b_1$, $B_{ceil}$, and $B_{floor}$ to the accent signal $a_2$, and selecting the one which gives a best match. A match is good if high values in the accent signal coincide with the beat times, leading into a high average accent signal value at the beat times. If one of the beat sequences which is based on the integer BPMs, in other words $B_{ceil}$, and $B_{floor}$, explains the accent signal $a_2$ well, that is, results in a high average accent signal value at beats, it will be selected over the baseline beat time sequence $b_1$. Experimental data has shown that this is often the case when the inputted music signal corresponds to electronic dance music (or other music with a strong beat indicated by the bass drum and having an integer valued tempo), and the method significantly improves performance on this style of music. When $B_{ceil}$ and $B_{floor}$ do not give a high enough average value, then the beat sequence $b_1$ is used. This has been observed to be the case for most music types other than electronic music.

It would be understood that rather than using the ceil($BPM_{est}$) and floor($BPM_{est}$), the method could operate also with a single integer valued BPM estimate. That is, the method calculates, for example, one of round($BPM_{est}$), ceil($BPM_{est}$) and floor($BPM_{est}$), and performs the beat tracking using that using the low-frequency accent signal $a_2$. In some cases, conversion of the BPM value to an integer might be omitted completely, and beat tracking performed using $BPM_{est}$ on $a_2$.

In cases where the tempo estimation step produces a sequence of BPM values over different temporal locations of the signal, the tempo value used for the beat tracking on the accent signal $a_2$ could be obtained, for example, by averaging or taking the median of the BPM values. That is, in this case the method could perform the beat tracking on the accent signal $a_1$ which is based on the chroma accent features, using the framewise tempo estimates from the tempo estimator. The beat tracking applied on $a_2$ could assume constant tempo, and operate using a global, averaged or median BPM estimate, possibly rounded to an integer.

The fit determiner further can comprise an output 1304 which is configured to output a tempo (BPM) estimate and the beat time sequence which corresponds to the best goodness score.

In some embodiments the music meter analyser can furthermore be configured to determine an estimate of the downbeats. A suitable method for estimating the downbeats is that which is described in Applicant's co-pending patent application number PCT/IB2012/052157 which for completeness is described here with reference to Figure 15.

It will be seen from Figure 15 that three processing paths are defined (left, middle, right) in determining an estimate of the downbeats according to the embodiments herein. The reference numerals applied to each processing stage are not indicative of order of processing. In some embodiments, the three processing paths can be performed in parallel allowing fast execution. In overview, the above-described beat tracking is performed to identify or estimate beat times in the audio signal. Then, at the beat times, each processing path generates a numerical value representing a differently-derived likelihood that the current beat is a downbeat. These likelihood values are normalised and then summed in a score-based decision algorithm that identifies which beat in a window of adjacent beats is a downbeat.

Steps 1501 and 1502 are identical to steps 701 and 706 shown in Figure 8, in other words can be considered to form part of the tempo and beat tracking method. In downbeat determination, the task is to determine which of the beat times correspond to downbeats, that is the first beat in the bar or measure.

The left-hand path (shown in Figure 15 as steps 1505 and 1506) calculate what the average pitch chroma is at the aforementioned beat locations and infers a chord change possibility which, if high, is considered indicative of a downbeat.

In some embodiments the music meter analyser comprises a chroma vector determiner configured to obtain the chroma vectors and the average chroma vector for each beat location. It would be understood that in some embodiments any suitable method for obtaining the chroma vectors can be employed. For example, in some embodiments a computationally simple method can be the applications of a Fast Fourier Transform (FFT) to calculate the short-time spectrum of the signal in one or more frames corresponding to the music signal between two beats. The chroma vector can then in some embodiments be obtained by summing the magnitude bins of the FFT belonging to the same pitch class.

In some embodiments a sub-beat resolution can be employed. For example, two chroma vectors per each beat could be calculated.

The operation of determining the chroma vector is shown in Figure 15 by step 1505.

In some embodiments the music meter analyser comprises a chord change estimator configured to receive the chroma vector and estimate a "chord change possibility" by differentiating the previously determined average chroma vectors for each beat location.

Trying to detect chord changes is motivated by the musicological knowledge that chord changes often occur at downbeats. The following function can in some embodiments be used to estimate the chord change possibility:

$$Chord\_change(t_i) = \sum_{j=1}^{12}\sum_{k=1}^{3}\left|\overline{c}_j(t_i) - \overline{c}_j(t_{i-k})\right| - \sum_{j=1}^{12}\sum_{k=1}^{3}\left|\overline{c}_j(t_i) - \overline{c}_j(t_{i+k})\right|$$

The first sum term in $Chord\_change(t_i)$ represents the sum of absolute differences between the current beat chroma vector and the three previous chroma vectors. The second sum term represents the sum of the next three chroma vectors. When a chord change occurs at beat $t_i$, the difference between the current beat chroma vector $\bar{c}(t_i)$ and the three previous chroma vectors will be larger than the difference between $\bar{c}(t_i)$ and the next three chroma vectors. Thus, the value of *Chord_change($t_i$)* will peak if a chord change occurs at time $t_i$.

It would be understood that the chord change estimator can employ any suitable Chord_change function, for example: using more than 12 pitch classes in the summation of *j*. In some embodiments, the value of pitch classes might be, e.g., 36, corresponding to a 1/3$^{rd}$ semitone resolution with 36 bins per octave. In addition, the function can be implemented for various time signatures. For example, in the case of a 3/4 time signature the values of *k* could range from 1 to 2. In some other embodiments, the amount of preceding and following beat time instants used in the chord change possibility estimation might differ. Various other distance or distortion measures could be used, such as Euclidean distance, cosine distance, Manhattan distance, Mahalanobis distance. Also statistical measures could be applied, such as divergences, including, for example, the Kullback-Leibler divergence. Alternatively, similarities could be used instead of differences.

The operation of determining a chord change estimate (a chroma difference estimate) is shown in Figure 15 by step 1507.

In some embodiments the music meter analyser further comprises a chroma accent determiner. The process of generating the salience-based chroma accent signal has already been described above in relation to beat tracking.

The generation of the chroma accent signal is shown in Figure 15 by step 1502.

In some embodiments the music meter analyser comprises a linear discriminant (LDA) transformer configured to receive and process the chroma accent signal at the determined beat instances.

The operation of applying a LDA transform synchronised to the beat times to the chroma accent signal is shown in Figure 15 by step 1503.

In some embodiments the music meter analyser comprises a further LDA transformer configured to receive and process the multirate accent signal. As described herein the multi rate accent signal relates more to drum or percussion content in the signal and does not emphasise harmonic information. Since both drum patterns and harmonic changes are known to be important for downbeat determination, it is attractive to use / combine both types of accent signals.

The operation of applying a LDA transform synchronised to the beat times to the multirate chroma accent signal is shown in Figure 15 by step 1509.

The LDA transformer and the further LDA transformer can be considered to obtain from each processing path a downbeat likelihood for each beat instance.

The LDA transformer can be trained from a set of manually annotated training data. As such it will be appreciated that LDA analysis involves a training phase and an evaluation phase.

In the training phase, LDA analysis is performed twice, separately for the salience-based chroma accent signal and the multirate accent signal.

The chroma accent signal would be understood to be a one dimensional vector.

The training method for both LDA transform stages is as follows:

1) sample the accent signal at beat positions;
2) go through the sampled accent signal at one beat steps, taking a window of four beats in turn;
3) if the first beat in the window of four beats is a downbeat, add the sampled values of the accent signal corresponding to the four beats to a set of positive examples;
4) if the first beat in the window of four beats is not a downbeat, add the sampled values of the accent signal corresponding to the four beats to a set of negative examples;
5) store all positive and negative examples. In the case of the chroma accent signal, each example is a vector of length four;
6) after all the data has been collected (from a catalogue of songs with annotated beat and downbeat times), perform LDA analysis to obtain the transform matrices. When training the LDA transform, it is advantageous to take as many positive examples (of downbeats) as there are negative examples (not downbeats). This can be done by randomly picking a subset of negative examples and making the subset size match the size of the set of positive examples.
7) collect the positive and negative examples in an M by d matrix [X]. M is the number of samples and d is the data dimension. In the case of the chroma accent signal, d=4.
9) Normalize the matrix [X] by subtracting the mean across the rows and dividing by the standard deviation.
10) Perform LDA analysis as is known in the art to obtain the linear coefficients W. Store also the mean and standard deviation of the training data.

In the online downbeat detection phase (i.e. the evaluation phases steps the downbeat likelihood can be obtained using the method:

- for each recognized beat time, construct a feature vector x of the accent signal value at the beat instant and three next beat time instants;
- subtract the mean and divide with the standard deviation of the training data the input feature vector x;
- calculate a score x*W for the beat time instant, where x is a 1 by d input feature vector and W is the linear coefficient vector of size d by 1.

A high score may indicate a high downbeat likelihood and a low score may indicate a low downbeat likelihood.

In the case of the chroma accent signal, the dimension d of the feature vector is 4, corresponding to one accent signal sample per beat. In the case of the multirate accent signal, the accent has four frequency bands and the dimension of the feature vector is 16.

The feature vector is constructed by unraveling the matrix of bandwise feature values into a vector.

In the case of time signatures other than 4/4, the above processing is modified accordingly. For example, when training a LDA transform matrix for a 3/4 time signature, the accent signal is travelled in windows of three beats. Several such transform matrices may be trained, for example, one corresponding to each time signature the system needs to be able to operate under.

It would be understood that in some embodiments alternatives to the LDA transformer can be employed. These include, for example, training any classifier, predictor, or regression model which is able to model the dependency between accent signal values and downbeat likelihood. Examples include, for example, support vector machines with various kernels, Gaussian or other probabilistic distributions, mixtures of probability distributions, k-nearest neighbour regression, neural networks, fuzzy logic systems, decision trees.

In some embodiments the music meter analyser can comprise a normalizer. The normalizer can as shown in Figure 15 receive the chroma difference and the LDA transformed chroma accent and multirate accent signals by dividing with their maximum absolute value.

The normalization operations are shown in Figure 15 by steps 1507, 1509 and 1510.

These can be combined and passed to a scored determiner

The operation of combining the normalized values is shown in Figure 15 by step 1511.

When the audio has been processed using the above-described steps, an estimate for the downbeat is generated by applying the chord change likelihood and the first and second accent-based likelihood values in a non-causal manner to a score-based algorithm.

The possible first downbeats are $t_1, t_2, t_3, t_4$, and the one that is selected is the one maximizing:

$$score(t_n) = \frac{1}{card(S(t_n))} \sum_{j \in S(t_n)} (w_c Chord\_change(j) + w_a a(j) + w_m m(j)) \quad , \quad n = 1,...,4$$

$S(t_n)$ is the set of beat times $t_n, t_n, +_4, t_{n+8}, ...$ .

$w_c$, $w_a$, and $w_m$ are the weights for the chord change possibility, chroma accent based downbeat likelihood, and multirate accent based downbeat likelihood, respectively.

The determination of downbeat candidates based on the highest score for the window of possible downbeats is shown in Figure 15 by step 1512.

It would be understood that in some embodiments the above scoring function is presented in the case of a 4/4 time signature and that other time signatures could be analysed also, such as 3/4 where there are three beats per measure. In other words that the disclosure can be generalised to other time signatures using suitable training parameters.

Furthermore the audio analyser in some embodiments comprises an audio change analyser 305.

The audio change analyser can be configured to receive the audio (music) signal and determine points within the audio signal where changes occur in the music structure. The audio change analyser can in some embodiments be configured to determine audio change points with an unsupervised clustering hidden markov model (HMM) method.

In such a manner feature vectors can be clustered to represent states which are used to find sections where the music signal repeats (feature vectors belonging to the same cluster are considered to be in a given state). The motivation for this is that in some cases musical sections, such as verse or chorus sections, have an overall sound which is relatively similar or homogenous within a section but which differs between sections. For example, consider the case where the verse section has relatively smooth instrumentation and soft vocals, whereas the choruses are played in a more aggressive manner with louder and stronger instrumentation and more intense vocals. In this case, features such as the rough spectral shape described by the mel-frequency coefficient vectors will have similar values inside a section but differing values between sections. It has been found that clustering reveals this kind of structure, by grouping feature vectors which belong to a section (or repetitions of it, such as different repetitions of a chorus) to the same state (or states). That is, there may be one or more clusters which correspond to the chorus, verse, and so on. The output of a clustering step may be a cluster index for each feature vector over the song. Whenever the cluster changes, it is likely that a new musical section starts at that feature vector.

The audio change analyser can therefore be configured to initialize a set of clusters by performing vector quantization on the determined chroma signals and Mel-frequency cepstral coefficient (MFCC) features separately. In other words the audio change analyser can be configured to take a single initial cluster; parameters of the single cluster are the mean and variance of the data (the chroma vectors measured from a track or a segment of music).

The audio change analyser can then be configured to split the initial cluster into two clusters.

The audio change analyser can then be configured to perform an iterative process wherein data is first allocated to the current clusters, new parameters (mean and variance) for the clusters are then estimated, and the cluster with the largest number of samples is split until a desired number of clusters are obtained.

To elaborate on this step, each feature vector is allocated to the cluster which is closest to it, when measured with the Euclidean distance, for example. Parameters for each cluster are then estimated, for example as the mean and variance of the vectors belonging to that cluster. The largest cluster is identified as the one into which the largest number of vectors have been allocated. This cluster is split such that two new clusters result having mean vectors which deviate by a fraction related to the standard deviation of the old cluster.

As an example, we have used a value 0.2 times the standard deviation of the cluster, and the new clusters have the new mean vectors $\mathbf{m}$ + 0.2*$\mathbf{s}$ and $\mathbf{m}$ - 0.2*$\mathbf{s}$, where $\mathbf{m}$ is the old mean vector of the cluster to be split and $\mathbf{s}$ its standard deviation vector.

The audio change analyser can then be configured to initialize a Hidden Markov model (HMM) to comprise a number of states, each with means and variances from the clustering step above, such that each HMM state corresponds to a single cluster and a fully-connected transition probability matrix with large self transition probabilities (e.g. 0.9) and very small transition probabilities for switching states.

In the case of a four state HMM, for example, the transition probability matrix would become:

$$
\begin{matrix}
0.9000 & 0.0333 & 0.0333 & 0.0333 \\
0.0333 & 0.9000 & 0.0333 & 0.0333 \\
0.0333 & 0.0333 & 0.9000 & 0.0333 \\
0.0333 & 0.0333 & 0.0333 & 0.9000
\end{matrix}
$$

The audio change analyser can then in some embodiments be configured to perform Viterbi decoding through the feature vectors using the HMM to obtain the most probable state sequence. The Viterbi decoding algorithm is a dynamic programming routine which finds the most likely state sequence through a HMM, given the HMM parameters and an observation sequence. When evaluating the different state sequences in the Viterbi algorithm, a state transition penalty is used having a set {-75, -100, -125, -150, -200, -250} when calculating in the log-likelihood domain. The state transition probability is added to the logarithm of the state transition probability whenever the state is not the same as the previous state. This penalizes fast switching between states and gives an output comprising longer segments.

The output of this step is a labelling for the feature vectors. Thus, for an input sequence of $c_1$, $c_2$, ..., $c_N$, where $c_i$ is a chroma vector at time $i$, the output is a sequence of cluster indices $l_1$, $l_2$, ..., $l_N$, where $1 \le l_i \le 12$ in the case of 12 clusters.

The audio change analyser can then in some embodiments after Viterbi segmentation, re-estimate the state means and variances based on the labelling results. That is, the mean and variance for a state is estimated from the vectors during which the model has been in that state according to the most likely state-traversing path obtained from the Viterbi routine. As an example, consider the state "3" after the Viterbi segmentation. The new estimate for the state "3" after the segmentation is calculated as the mean of the feature vectors $c_i$ which have the label 3 after the segmentation.

To give a simple example: assume two states 1 and 2 in the HMM. Further assume that the input comprises five chroma vectors $c_1$, $c_2$, $c_3$, $c_4$, $c_5$. Further assume that the most likely state sequence obtained from the Viterbi segmentation is 1, 1, 1, 2, 2. That is, the three first chroma vectors $c_1$ through $c_3$ are most likely produced by the state 1 and the remaining two chroma vectors $c_4$ and $c_5$ by state 2. Now, the new mean for state 1 is estimated as the mean of chroma vectors $c_1$ through $c_3$ and the new mean for state 2 is estimated as the mean of chroma vectors $c_4$ and $c_5$. Correspondingly, the variance for state 1 is estimated as the variance of the chroma vectors $c_1$ through $c_3$ and the variance for state 2 as the variance of chroma vectors $c_4$ and $c_5$.

The audio change analyser can then in some embodiments repeat the Viterbi segmentation and state parameter re-estimations until a maximum of five iterations are made, or the labelling of the data does not change anymore.

The audio change analyser can then obtain indication of an audio change at each feature vector by monitoring the state traversal path obtained from the Viterbi algorithm (from the final run of the Viterbi algorithm). For example, the output from the last run of the Viterbi algorithm might be 3, 3, 3, 5, 7, 7, 3, 3, 7, 12, ...

The output is inspected to determine whether there is a state change at each feature vector. In the above example, if 1 indicates the presence of a state change and 0 not, the output would be 0, 0, 0, 1, 1, 0, 1, 0, 1, 1, ...

The output from the HMM segmentation step is a binary vector indicating whether there is a state change happening at that feature vector or not. This is converted into a binary score for each beat by finding the nearest beat corresponding to each feature vector and assigning the nearest beat a score of one. If there is no state change happening at a beat, the beat receives a score of zero.

The feature clustering and consequent HMM-based segmentation is repeated with a pool of different cluster amounts (we used the set {4, 8, 10, 12, 14, 16}) and state transition penalty values (we used the set {-75, -100, -125, -150, -200, -250}). All combinations of the values of the two parameters are used.

The two change point pools (resulting from running the clustering and HMM-based segmentation of the two feature types with all the parameter combinations) are quantized to beats, downbeats, and downbeats of 2-measure groupings. Thus we get pools of beat-quantized chroma change points, downbeat-quantized chroma change points, 2-measure group downbeat-quantized chroma change points, beat-quantized MFCC change points, downbeat-quantized MFCC change points, and 2-measure group downbeat-quantized MFCC change points.

In some embodiments the audio analyser comprises a music structure analyser 307.

The music structure analyser 307 in some embodiments is configured to analyse the music structure.

The music structure analyser 307 can in some embodiments receive as inputs the beat synchronous chroma vectors. Such vectors are used to construct a so-called self distance matrix (SDM) which is a two dimensional representation of the similarity of an audio signal when compared with itself over all time frames. An entry d(i,j) in this SDM represents the Euclidean distance between the beat synchronous chroma vectors at beats i and j.

An example SDM for a musical signal is depicted in Figure 16. The main diagonal line 1601 is where the same part of the signal is compared with itself; otherwise, the shading (only the lower half of the SDM is shown for clarity) indicates by its various levels the degree of difference/similarity. By detecting off-diagonal stripes representing low distances, one can detect repetitions in the music. Here, downbeats which begin each chorus section (fundamental downbeats) are visible and detectable using known analysis techniques.

Figure 17 for example shows the principle of creating a SDM. If there are two audio segments s1 1701 and s2 1703, such that inside a musical segment the feature vectors are quite similar to one other, and between the segments the feature vectors 1700 are less similar, then there will be a checkerboard pattern on corresponding SDM locations. More specifically, the area marked 'a' 1711 denotes distances between the feature vectors belonging to segment s1 and thus the distances are quite small. Similarly, segment 'd' 1741 is the area corresponding to distances between the feature vectors belonging to the segment s2, and these distances are also quite small. The areas marked 'b' 1721 and 'c' 1731 correspond to distances between the feature vectors of segments s1 and s2, that is, distances across these segments. Thus, if these segments are not very similar to each other (for example, at a musical section change having a different instrumentation and/or harmony) then these areas will have a larger distance and will be shaded accordingly.

Performing correlation along the main diagonal with a checkerboard kernel can emphasise this kind of pattern.

In some embodiments the music structure analyser is configured to determine a novelty score using the self distance matrix (SDM). The novelty score results from the correlation of the checkerboard kernel along the main diagonal; this is a matched filter approach which shows peaks where there is locally-novel audio and provides a measure of how likely it is that there is a change in the signal at a given time or beat. In such embodiments border candidates are generated using a suitable novelty detection method.

The novelty score for each beat acts as a partial indication as to whether there is a structural change and also a pattern beginning at that beat.

An example of a ten by ten checkerboard kernel is given below:

| | | | | | | | | | |
|---|---|---|---|---|---|---|---|---|---|
| -0.0392 | -0.0743 | -0.1200 | -0.1653 | -0.1940 | 0.1940 | 0.1653 | 0.1200 | 0.0743 | 0.0392 |
| -0.0743 | -0.1409 | -0.2276 | -0.3135 | -0.3679 | 0.3679 | 0.3135 | 0.2276 | 0.1409 | 0.0743 |
| -0.1200 | -0.2276 | -0.3679 | -0.5066 | -0.5945 | 0.5945 | 0.5066 | 0.3679 | 0.2276 | 0.1200 |
| -0.1653 | -0.3135 | -0.5066 | -0.6977 | -0.8187 | 0.8187 | 0.6977 | 0.5066 | 0.3135 | 0.1653 |
| -0.1940 | -0.3679 | -0.5945 | -0.8187 | -0.9608 | 0.9608 | 0.8187 | 0.5945 | 0.3679 | 0.1940 |
| 0.1940 | 0.3679 | 0.5945 | 0.8187 | 0.9608 | -0.9608 | -0.8187 | -0.5945 | -0.3679 | -0.1940 |
| 0.1653 | 0.3135 | 0.5066 | 0.6977 | 0.8187 | -0.8187 | -0.6977 | -0.5066 | -0.3135 | -0.1653 |
| 0.1200 | 0.2276 | 0.3679 | 0.5066 | 0.5945 | -0.5945 | -0.5066 | -0.3679 | -0.2276 | -0.1200 |
| 0.0743 | 0.1409 | 0.2276 | 0.3135 | 0.3679 | -0.3679 | -0.3135 | -0.2276 | -0.1409 | -0.0743 |
| 0.0392 | 0.0743 | 0.1200 | 0.1653 | 0.1940 | -0.1940 | -0.1653 | -0.1200 | -0.0743 | -0.0392 |

Note that the actual values and the exact size of the kernel may be varied. This kernel is passed along with the main diagonal of one or more SDMs and the novelty score at each beat is calculated by a point wise multiplication of the kernel and the SDM values. To calculate the novelty score for a frame at index j, the kernel top left corner is positioned at the location j-kernelSize/2+1, j-kernelSize/2+1, pointwise multiplication is performed between the kernel and the corresponding SDM values, and the resulting values are summed.

The novelty score for each beat can in some embodiments be normalized by dividing with the maximum absolute value.

The music structure analyser 307 can in some embodiments be configured to construct a self distance matrix (SDM) in the same way as described herein but in this case the difference between chroma vectors is calculated using the so-called Pearson correlation coefficient instead of Euclidean distance. In some embodiments Cosine distances or the Euclidean distance could be used as an alternatives.

The music structure analyser 307 can then in some embodiments be configured to identify repetitions in the SDM. As noted above, diagonal lines which are parallel to the main diagonal are indicative of a repeating audio in the SDM, as one can observe from the locations of chorus sections. One method for determining repetitions can be to firstly, locate approximately repeated chroma sequences and a greedy algorithm used to decide which of the sequences are indeed musical segments. Pearson correlation coefficients are obtained between every pair of chroma vectors, which together represent the beat-wise SDM.

In order to eliminate short term noise, a median filter of length five is run diagonally over the SDM. Next, repetitions of eight beats in length are identified from the filtered SDM.

A repetition of length L beats is defined as a diagonal segment in the SDM, starting at coordinates (m, k) and ending at (m+L-1, k+L-1), where the mean correlation value is high enough. This means that the L beat long section of the track starting at beat m repeats at beat k. Here, L=8 beats.

A repetition is stored if it meets the following criteria:

    i) the repeating sections both start at a downbeat, and
    ii) the mean correlation value over the repetition is equal to, or larger than, 0.8.

To do this, the music structure analyser may first search all possible repetitions, and then filter out those which do not meet the above conditions. The possible repetitions can first be located from the SDM by finding values which are above the correlation threshold. Then, filtering can be performed to remove those which do not start at a downbeat, and those where the average correlation value over the diagonal (m,k), (m+L-1,k+L-1) is not equal to, or larger than, 0.8.

The start indices and the mean correlation values of the repetitions filling the above conditions are stored. In some embodiments where greater than a determined number of repetitions are found the first number of repetitions with the largest average correlation value are be stored.

Next, overlapping repetitions are removed. All pairs of overlapping repetition regions are found and only the one with the larger correlation value is retained. An overlapping repetition for the repetition (m,k), (m+L-1,k+L-1) may be defined, for example, as another repetition (p,q), (p+T-1,q+T-1) such that abs(p-m) < max(L,T) and abs(q-k) < max(L,T) and abs(p-m) = abs(q-k), where "abs" denotes the absolute value and "max" the maximum. In other words, there must be overlap between the repetitions and they must be located on the same diagonal of the SDM.

In some embodiments, a different method of obtaining the music structure can be utilized. For example, the method described in Paulus, J., Klapuri, A., "Music Structure Analysis Using a Probabilistic Fitness Measure and a Greedy Search Algorithm", IEEE Transactions on Audio, Speech, and Language Processing, vol. 17, no. 6, August 2009, pp. 1159-1170. DOI:10.1109/TASL.2009.2020533 could be used.

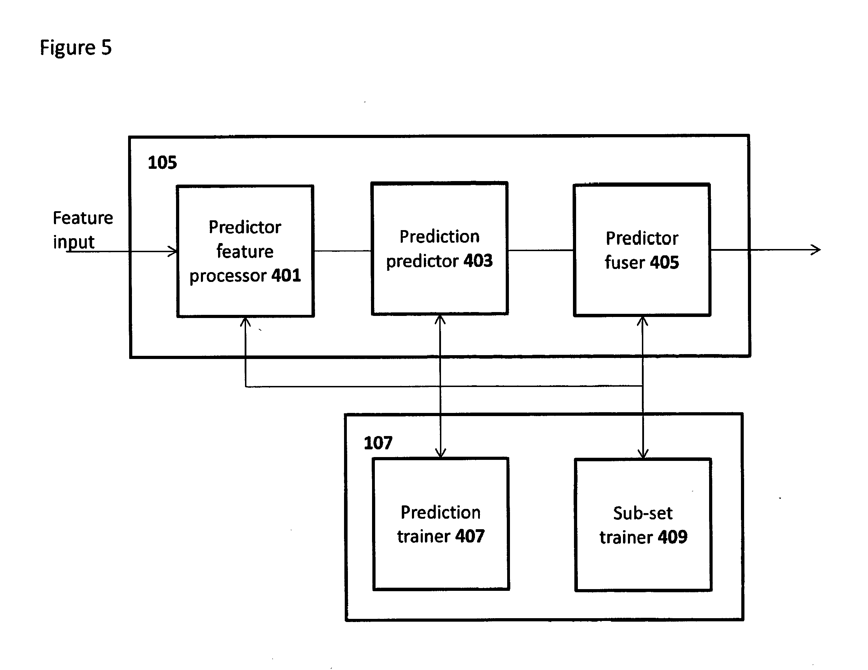

With respect to Figure 5 a detailed diagram of the predictor module 105 and training module 107 is shown in further detail.

In some embodiments the predictor module 105 receives the feature values from the analyser module 103. In some embodiments the predictor module 105 comprises a predictor feature processor 401. The predictor feature processor 401 can be configured to process the features prior to prediction operations. For example features extracted with the mentioned analysis methods can be combined at each detected beat time. Furthermore in some embodiments features with continuous values are normalized by subtracting the mean value and dividing with the standard deviation. In some embodiments features can be transformed for better separation of the classes for instance by linear discriminant analysis (LDA) or principal component analysis (PCA), and a more compact subset of features can be searched for example with Fisher Score feature selection method or Sequential forward floating selection (SFFS) search.

The processed features can in some embodiments be output to a prediction predictor 407.

In some embodiments the predictor module 105 can be configured to comprise a prediction predictor 407. The prediction predictor 407 can be configured to receive the output of the predictor feature processor 401. Furthermore in some embodiments the predictor can be configured to receive the output of the prediction trainer 403.

The prediction predictor 407 output can in some embodiments pass the prediction output to a predictor fuser/combiner 409.

In some embodiments the predictor module 105 comprises a predictor fuser 409. The predictor fuser 409 can be configured to receive the output of the prediction predictor 407. Furthermore in some embodiments the predictor fuser 409 is configured to receive the output of the subset trainer/determiner 405.

The predictor fuser 409 can be configured to output a suitable estimate of the accent output.

The training module 107 can in some embodiments be configured to comprise a prediction trainer 407. The prediction trainer 407 can be configured to receive the outputs from the predictor module, and specifically the predictor feature processor 401, the prediction predictor 403 and the prediction fuser 405. The prediction trainer 403 can be configured to generate and output a prediction trainer output to the predictor module 105, the analyser module 103 and to the subset trainer/determiner 409.

In some embodiments the training block/module 107 further comprises a subset trainer/determiner 409. The subset trainer/determiner 409 can be configured to receive an input from the prediction trainer 403 and generate and output a subset output to the predictor module 105 and to the analyser module 103.

The operation of the analyser is described in further detail with respect to Figures 6 and 7 which describe the analyser operating in a training mode (offline) Figure 6 and a predictor mode (online) Figure 7.

With respect to Figure 6, the training mode, it is shown that the analyser module 103 is configured to perform analysis on training data. The analysis operations are shown grouped in block 501.

This analysis as described herein can comprise the operations of:

Music meter analysis as shown in Figure 6 by step 515;
Audio energy onset analysis as shown in Figure 6 by step 513;
Music structure analysis as shown in Figure 6 by step 511; and
Audio change analysis as shown in Figure 6 by step 517.

In some embodiments the output of features can be passed either directly or via a 'pre-processed', 'selected', and predictor route.

Thus for example in some embodiments prediction predictor 403 can be configured to receive the features and generate predictors which are passed to the prediction trainer 407.

The prediction and training operations are shown as block 503 comprising a feature pre-processing and selection operation (step 521), a subset search of the pools of audio change points (step 519), a predictor training operation (step 523) and a component predictor subset search (step 525).

In some embodiments the prediction predictor 403 can be configured to generate the following features and predictors which can be used to generate within the prediction trainer 407 a support vector machine (SVM) predictor set of:

1. Sequential forward floating selection (SFFS) search optimized subsets of audio change points in the audio change point pools;
2. bass-band energy onset features;
3. wide-band energy onset features;
4. bass-band energy onset feature ($f_B^4$), average values of its first and second derivatives within the sampling window, and its difference from the previous sampling frame;
5. wide-band energy onset feature from equation ($f_W^4$), average values of its first and second derivatives within the sampling window, and its difference from the previous sampling frame;
6. all energy onset features concatenated with downbeat and 2-bar group downbeat signals;
7. dimensions corresponding to the 18 largest eigenvalues of PCA transform of 3;
8. 128-dimensional subset of all the extracted features chosen by picking the features having the largest ratio of between-class separation and within-class separation; and
9. Dimensions corresponding to the 19 largest eigenvalues of PCA transform of all the extracted features.

It would be understood that in some embodiments other combinations of the features can be employed. As the amount of emphasized beats is generally considerably smaller compared to the amount of other non-emphasized beats in music and songs, in some embodiments multiple predictors are trained for each feature type by using as training data the combination of all emphasized beats and different subsets from the set of remaining non-emphasized beats. In each training set we use 2 times as many other beats as is the amount of annotated emphasized beats. In some embodiments 11 different training sets are used (in other words other beats sampling iterations) per each feature set. However, the ratio of the emphasized and non-emphasized beat samples in the training set as well as the amount of sampling iterations can be varied by experimentation or optimized with a suitable optimization algorithm.

In some embodiments, the quantized audio change point estimates as well as the song structure analysis output can be used as component predictors in addition to the trained predictors. For example, binary features indicating the presence of an audio change point or the presence of a structural boundary can in some embodiments be used as features inputted to the predictor.

The predictor trainer and the sub-set trainer can furthermore be configured to search the set of component predictors and other features to determine a more optimised sub-set of the component predictors and other features which predict the emphasized beat times.

The trainers can for example in some embodiments search the suboptimal set of component predictors using a sequential forward floating selection (SFFS) method. In the method as applied to a set of predictors, the optimal set of predictors is sequentially appended with the candidate predictor that results in the greatest gain in the optimization criterion. After each appending step, the current set of chosen predictors is iteratively searched for one component smaller subsets producing a higher value of the optimization criterion.

If such subsets are found, the one maximizing the optimization criterion is chosen as the new current set, and the search repeated among its subsets. After this possible pruning of the chosen set, a new incrementation search is done within the set of all the candidate predictors currently not in the chosen set.

At each inclusion as well as pruning iteration the working set is compared to the chosen sets at previous iterations, in order to prevent pruning or inclusion operations, which would lead to a previously visited set.

In some embodiments the optimization criterion can be found from the combination of a fused prediction F-score calculated for the positive (in other words emphasized beats) class and difficulty, which estimates the predictor set diversity (in other words the lack of correlation among the erroneous predictions).

In some embodiments the F-score is defined as

$$F_\beta = (1 + \beta^2) \cdot \frac{\text{precision} \cdot \text{recall}}{(\beta^2 \cdot \text{precision}) + \text{recall}},$$

where precision is the ratio of correct positive predictions and all positive predictions, recall is the ratio of correct positive predictions and all positive ground truth data, and $\beta$ adjusts the emphasis between precision and recall. In such embodiments a $\beta$ value of 1 gives equal emphasis on precision and recall, while higher values give more weight to recall and lower for precision. The term Difficulty $\theta$ is the within-dataset-variance of random variable $Y$, which takes values from the set $\{0, \frac{1}{L}, \frac{2}{L}, ..., 1\}$ according to how many of the $L$ predictors classify a data point correctly.

Specifically, in some embodiments the optimization criterion is set as

$$wF_\beta - (1 - w)\theta, \quad 0 \le w \le 1,$$

where $w$ is the weight of emphasizing $F_\beta$ over $\theta$. The difficulty measure is introduced to favour a more diverse set of component predictors, and assigned a negative sign, as lower values indicate a higher degree of diversity. In the practical experiments w value of 0.95 from the set {0.33, 0.5, 0.67, 0.8, 0.9, 0.95, 1.0} gave the best performance.

In some embodiments (such as shown in Figure 6 by step 519) the component predictor search is applied first to the pools of audio change points. This is performed separately for each pool of MFCC and chroma change points, and the 3 quantization levels corresponding to different metrical levels, in order to find the optimal set of candidate change points from each of the 6 pools. Aside from performance optimization this operation has the advantage of reducing the set of parameters, using which the audio change points need to be calculated. SVM classifiers are trained for each of the optimized candidate sets.

The predictor subset optimized with the SFFS search over all component predictors (step 525) in an evaluation dataset can then be used in the online phase to detect emphasized beats in songs outside the training data.

The optimisation of the sub-sets can as described herein be used to then control the analyser module to determine and/or output the analysis features which occur within the sub-set of features.

It would be understood that in some embodiments the training block 107 is configured to operate in any suitable mode such as supervised or semisupervised learning methods.

With respect to Figure 7, the prediction (or online) mode, it is shown that the analyser module 103 is configured to perform analysis on training data. The analysis operations are shown grouped in block 501.

This analysis as described herein can comprise the operations of:

Music meter analysis as shown in Figure 6 by step 515;
Audio energy onset analysis as shown in Figure 6 by step 513;
Music structure analysis as shown in Figure 6 by step 511; and

Audio change analysis as shown in Figure 6 by step 517.

In some embodiments the output of features can be passed either directly or via a 'pre-processed', 'selected', and predictor route.

Thus for example in some embodiments prediction predictor 403 can be configured to receive the features and generate predictors.

The prediction operations are shown as block 603 comprising a feature pre-processing and selection operation (step 621), and a predictor prediction operation (step 623).

In other words the main difference to the offline phase depicted in Figure 6 is that the optimal subset search blocks are not present and predictor training, is replaced with a prediction predictor, which does the prediction using the predictors that were trained in the offline phase. Additionally, the predictions of the optimal set of component predictors are fused to get an overall prediction of the emphasized beat times.

The prediction output phase is shown in Figure 7 by block 605 which comprises the prediction fusion operation (step 627) and the output of emphasized beat times operation (step 629).

With respect to Figure 18 an example audio signal with annotated components of the analysis is shown. The audio signal 1700 is shown with components marked on the audio signal showing annotated emphasized beats 1707, detected structure boundaries 1709, energy onsets above a threshold 1711, detected downbeats starting a 2-measure group 1701, detected downbeats 1703, detected beats 1705 and audio change points with different parameters 1713.

In this example the audio change points are shown before the quantization. Furthermore different heights of the audio change points mean different base features (chroma and MFCC) and different combinations of parameters. The different heights are not related to the analysis but are just added for helping the visualization.

In some embodiments of the invention, video postprocessing effects are applied on detected emphasized beats. That is, in this case the invention may be used in combination with a video editing system. The system may perform video editing in such a manner that a cut between video views or angles is made at a beat. In some embodiments, the system may inspect the beat where a cut is made, and insert a postprocessing effect such as a white flash or other suitable effect if the beat is a downbeat. Other suitable effects such as blur could be applied. Furthermore, in some embodiments the strength of the emphasized beat may be used to control the selection or the strength of the effect. In some embodiments, the strength of the emphasized beat is determined in the prediction fusion operation (step 627) such that the strength is proportional to the number of predictors which agree that the beat is an emphasized beat. In some embodiments, one or more component predictors are trained in such a manner that they produce probabilities for the beat to be emphasized and the probability from a component predictor or a probability from the prediction fusion 627 may be used as a degree of emphasis for the beat.

In some other embodiments, the detected emphasized beats are used in various other ways. In one embodiment, a user is able to perform skip-to-emphasized-beat type functionality such that he changes the playback position during rendering, e.g., by interacting with a button on a UI, and as a result the system will skip the playback position to the next emphasized beat in the audio signal. This allows a convenient way of browsing the audio signal by skipping from one emphasized beat to another.

In some other embodiments, the system performs looping functionality for the audio signal such that it loops an audio signal portion between two emphasized beats. In yet some other embodiments, the system is used in an audio search system. In this scenario, the user may be able to search for songs with a small amount or a large amount of detected emphasized beats. In some other embodiments, the invention is used in a music similarity or a music recommendation system. In such an example, the similarity between two music tracks may be at least partially determined based on the emphasized beats they have. In one embodiment, the amount of emphasized beats in two songs is compared and the songs are judged to be similar if they share the same amount of emphasized beats. In some embodiments, the timing of the emphasized beats is also taken into account, such that if the locations of emphasized beats match then a higher degree of similarity is declared between two songs.

The foregoing description has provided by way of exemplary and non-limiting examples a full and informative description of the exemplary embodiment of this invention. However, various modifications and adaptations may become apparent to those skilled in the relevant arts in view of the foregoing description, when read in conjunction with the accompanying drawings.

Although the above has been described with regards to audio signals, or audiovisual signals it would be appreciated that embodiments may also be applied to audio-video signals where the audio signal components of the recorded data are processed in terms of the determining of the base signal and the determination of the time alignment factors for the remaining signals and the video signal components may be synchronised using the above embodiments of the invention. In other words the video parts may be synchronised using the audio synchronisation information.

It shall be appreciated that the term user equipment is intended to cover any suitable type of wireless user equipment, such as mobile telephones, portable data processing devices or portable web browsers.

Furthermore elements of a public land mobile network (PLMN) may also comprise apparatus as described above.

In general, the various embodiments of the invention may be implemented in hardware or special purpose circuits, software, logic or any combination thereof. For example, some aspects may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The embodiments of this invention may be implemented by computer software executable by a data processor of the mobile device, such as in the processor entity, or by hardware, or by a combination of software and hardware. Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (ASIC), gate level circuits and processors based on multi-core processor architecture, as non-limiting examples.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

Programs, such as those provided by Synopsys, Inc. of Mountain View, California and Cadence Design, of San Jose, California automatically route conductors and locate components on a semiconductor chip using well established rules of design as well as libraries of pre-stored design modules. Once the design for a semiconductor circuit has been completed, the resultant design, in a standardized electronic format (e.g., Opus, GDSII, or the like) may be transmitted to a semiconductor fabrication facility or "fab" for fabrication.

The foregoing description has provided by way of exemplary and non-limiting examples a full and informative description of the exemplary embodiment of this invention. However, various modifications and adaptations may become apparent to those skilled in the relevant arts in view of the foregoing description, when read in conjunction with the accompanying drawings and the appended claims. However, all such and similar modifications of the teachings of this invention will still fall within the scope of this invention as defined in the appended claims.

## Claims

1. An apparatus comprising:

   means for determining at least one sub-set of analysers, wherein the sub-set of analysers are determined from a set of possible analysers;
   means for analysing at least one audio signal using the at least one sub-set of analysers to generate at least two analysis features;
   means for determining from the at least two analysis features the presence or absence of at least one accentuated point within the at least one audio signal.

2. The apparatus as claimed in claim 1, wherein the means for determining at least one sub-set of analysers comprises:

   means for analysing at least one annotated audio signal using the set of possible analysers to determine at least two training analysis features;
   means for determining from the at least two training analysis features at least one accentuated point within the at least one annotated audio signal;
   means for searching for the at least one sub-set of analysers by comparing the at least at least one accentuated point within the at least one annotated audio signal with at least one annotated audio signal annotations.

3. The apparatus as claimed in claim 2, wherein the means for searching for the at least one sub-set of analysers comprises means for applying a sequential forward floating selection search.

4. The apparatus as claimed in claim 3, wherein the means for applying a sequential forward floating selection search comprises means for generating an optimization criteria comprising a combination of a fused prediction F-score for the positive class and difficulty in the form of identified accentuated points.

5. The apparatus as claimed in any of claims 1 to 4, wherein the means for analysing at least one audio signal using the at least one sub-set of analysers to generate at least two analysis features comprises means for controlling the operation of the set of analysers to activate only the at least one sub-set of analysers to generate at least two analysis features.

6. The apparatus as claimed in any of claims 1 to 5, wherein the means for analysing at least one audio signal using the at least one sub-set of analysers to generate at least two analysis features comprises means for generating at least two features from:

   at least one music meter analysis feature;
   at least one audio energy onset feature;
   at least one music structure feature;
   at least one audio change feature.

7. The apparatus as claimed in any of claims 1 to 6, wherein the means for determining from the at least two analysis features the presence or absence of at least one accentuated point within the at least one audio signal comprises:

   means for generating a support vector machine predictor sub-set comprising the determined at least two analysis features;
   means for generating a prediction of the presence or absence of the at least one accentuated point within the at least one audio signal from a fusion of the support vector machine predictor sub-set comprising the determined at least two analysis features.

8. The apparatus as claimed in any of claims 1 to 7, further comprising at least one of:

   means for skipping to the determined at least one accentuated point within the at least one audio signal during a playback of the at least one audio signal;
   means for skipping to the determined at least one accentuated point within the at least one audio signal during a playback of an audio-video signal comprising the at least one audio signal;
   means for looping between at least two of the determined at least one accentuated point within the at least one audio signal during a playback of the at least one audio signal;
   means for looping between at least two of the determined at least one accentuated point within the at least one audio signal during a playback of an audio-video signal comprising the at least one audio signal;
   means for searching for audio signals comprising a defined amount of accentuated points using the determined at least one accentuated point within the audio signal;
   means for searching for further audio signals comprising a defined amount of accentuated points, wherein the defined amount of accentuated points is determined from the number or rate of accentuated points within the audio signal;
   means for searching for further audio signals comprising a defined amount of accentuated points at a further defined time period within the further audio signal, wherein the defined amount of accentuated points within the further audio signal is determined from the number or rate of accentuated points within the audio signal at a similar time period within the audio signal.

9. A method comprising:

   determining at least one sub-set of analysers, wherein the sub-set of analysers are determined from a set of possible analysers;
   analysing at least one audio signal using the at least one sub-set of analysers to generate at least two analysis features;
   determining from the at least two analysis features the presence or absence of at least one accentuated point within the at least one audio signal.

10. The method as claimed in claim 9, wherein determining at least one sub-set of analysers comprises:

   analysing at least one annotated audio signal using the set of possible analysers to determine at least two training analysis features;
   determining from the at least two training analysis features at least one accentuated point within the at least one annotated audio signal;
   searching for the at least one sub-set of analysers by comparing the at least at least one accentuated point within the at least one annotated audio signal with at least one annotated audio signal annotations.

11. The method as claimed in claim 10, wherein searching for the at least one sub-set of analysers comprises applying a sequential forward floating selection search.

12. The method as claimed in claim 11, wherein applying a sequential forward floating selection search comprises generating an optimization criteria comprising a combination of a fused prediction F-score for the positive class and difficulty in the form of identified accentuated points.

13. The method as claimed in any of claims 9 to 12, wherein analysing at least one audio signal using the at least one sub-set of analysers to generate at least two analysis features comprises controlling the operation of the set of analysers to activate only the at least one sub-set of analysers to generate at least two analysis features.

14. The method as claimed in any of claims 9 to 13, wherein analysing at least one audio signal using the at least one sub-set of analysers to generate at least two analysis features comprises generating at least two features from:

   at least one music meter analysis feature;
   at least one audio energy onset feature;
   at least one music structure feature;
   at least one audio change feature.

15. The method as claimed in any of claims 9 to 14, wherein determining from the at least two analysis features the presence or absence of at least one accentuated point within the at least one audio signal comprises:

   generating a support vector machine predictor sub-set comprising the determined at least two analysis features;
   generating a prediction of the presence or absence of the at least one accentuated point within the at least one audio signal from a fusion of the support vector machine predictor sub-set comprising the determined at least two analysis features.

16. The method as claimed in any of claims 9 to 15, further comprising at least one of:

   skipping to the determined at least one accentuated point within the at least one audio signal during a playback of the at least one audio signal;
   skipping to the determined at least one accentuated point within the at least one audio signal during a playback of an audio-video signal comprising the at least one audio signal;
   looping between at least two of the determined at least one accentuated point within the at least one audio signal during a playback of the at least one audio signal;
   looping between at least two of the determined at least one accentuated point within the at least one audio signal during a playback of an audio-video signal comprising the at least one audio signal;
   searching for audio signals comprising a defined amount of accentuated points using the determined at least one accentuated point within the audio signal;
   searching for further audio signals comprising a defined amount of accentuated points, wherein the defined amount of accentuated points is determined from the number or rate of accentuated points within the audio signal;
   searching for further audio signals comprising a defined amount of accentuated points at a further defined time period within the further audio signal, wherein the defined amount of accentuated points within the further audio signal is determined from the number or rate of accentuated points within the audio signal at a similar time period within the audio signal.

Figure 1

EP 2 854 128 A1

Figure 2

```
┌─────────────────┐     ┌─────────────────┐     ┌─────────────────┐
│  Audio framer/  │     │    Analyser     │     │    Predictor    │
│  preprocessor   │─────│     module      │─────│     module      │
│      101        │     │      103        │     │      105        │
└─────────────────┘     └────────┬────────┘     └────────┬────────┘
                                 │                       │
                                 └───────────┬───────────┘
                                             │
                                  ┌──────────┴──────────┐
                                  │   Training block    │
                                  │   offline/online    │
                                  │     selector        │
                                  │        107          │
                                  └─────────────────────┘
```

Figure 3

EP 2 854 128 A1

Input audio **201**

Generate frames/preprocess audio to determine
components for analysis for example:
$E_B$ : Bass band energy envelope
$E_W$: Wide band energy envelope
**203**

Analyse audio/audio components to determine
features **205**

Training/offline mode? **207**

Yes

No

Determine sub-sets of features
based on annotated audio data **209**

Apply sub-sets of features/group
features **208**

Control analysers to determine only
selected features **211**

Determine prediction based on sub-
set features **210**

Figure 4

**103**

Audio energy
onset analyser **301**

Music meter
analyser **303**

Audio change
analyser **305**

Music structure
analyser **307**

To
predictor

To/from training
block

EP 2 854 128 A1

Figure 5

Feature input → **105** Predictor feature processor **401** → Prediction predictor **403** → Predictor fuser **405** →

**107** Prediction trainer **407** Sub-set trainer **409**

EP 2 854 128 A1

Figure 6

Figure 7

EP 2 854 128 A1

Figure 8

303 →

701 — F0-Salience based chroma feature extraction

702 — Chroma accent

703 — BPM estimation

706 — Multirate accent

707 — Obtain accent on the lowest frequency band

$a_1$

$a_2$

$BPM_{est}$

705 — Calculate the largest previous (floor) and smallest following (ceil) of BPM

704 — Beat tracking using the BPM and the chroma accent

$B_1$

708 — Find the best beat sequences using the constant ceil and floor BPM

$B_{ceil}$

$B_{floor}$

710 — Calculate a goodness of fit score for the beat time sequences

709 — Calculate a goodness of fit score for the beat time sequence

$a_2$

711 — Max

712 — Output beat times and BPM

EP 2 854 128 A1

Figure 9

Audio
signal  Audio
signal  F0
salience  F0
salience  Chroma  Accent
signal

```
┌──────────┐      ┌──────────┐      ┌──────────┐      ┌──────────┐      ┌──────────┐
│  Frame   │      │   F0     │──►   │Map to 1/3rd│──►  │Sum pitch │──►   │  Accent  │
│ blocking │ ──►  │ salience │──►   │ semitone │──►   │  class   │──►   │calculation│──►
│          │      │estimation│ 965  │  scale   │ 100  │equivalences│ 36 │          │
└──────────┘      └──────────┘──►   └──────────┘──►   └──────────┘──►   └──────────┘
     │                 │                 │                 │                 │
    800               801               803               805               807
```

Figure 10

Figure 11

## Figure 12

EP 2 854 128 A1

Figure 13

Figure 14

EP 2 854 128 A1

Figure 15

EP 2 854 128 A1

Figure 16

Figure 17

Figure 18

EP 2 854 128 A1

| | Europäisches<br>Patentamt<br>European<br>Patent Office<br>Office européen<br>des brevets | **EUROPEAN SEARCH REPORT** | Application Number<br>EP 14 18 6150 |

## DOCUMENTS CONSIDERED TO BE RELEVANT

| Category | Citation of document with indication, where appropriate,<br>of relevant passages | Relevant<br>to claim | CLASSIFICATION OF THE<br>APPLICATION (IPC) |
|---|---|---|---|
| X | US 2001/049086 A1 (PAQUETTE JOHN [US] ET AL) 6 December 2001 (2001-12-06)<br>* paragraph [0003] - paragraph [0174] * | 1-16 | INV.<br>G10H1/00 |
| X | US 2007/044641 A1 (MCKINNEY MARTIN F [NL] ET AL MCKINNEY MARTIN FRANCISCUS [NL] ET AL) 1 March 2007 (2007-03-01)<br>* paragraph [0001] - paragraph [0053] * | 1-16 | |
| X | US 2009/173216 A1 (GATZSCHE GABRIEL [DE] ET AL) 9 July 2009 (2009-07-09)<br>* paragraph [0001] - paragraph [0316] * | 1-16 | |
| A | US 2008/236371 A1 (ERONEN ANTTI [FI])<br>2 October 2008 (2008-10-02)<br>* paragraph [0001] - paragraph [0125] * | 1-16 | |
| A | US 7 227 072 B1 (WEARE CHRISTOPHER B [US])<br>5 June 2007 (2007-06-05)<br>* column 1, line 5 - column 11, line 42 * | 1-16 | |

TECHNICAL FIELDS
SEARCHED       (IPC)

G10H
H04R
H04S

The present search report has been drawn up for all claims

| Place of search | Date of completion of the search | Examiner |
|---|---|---|
| Munich | 26 January 2015 | Peirs, Karel |

EPO FORM 1503 03.82 (P04C01)

## ANNEX TO THE EUROPEAN SEARCH REPORT
## ON EUROPEAN PATENT APPLICATION NO.

EP 14 18 6150

This annex lists the patent family members relating to the patent documents cited in the above-mentioned European search report.
The members are as contained in the European Patent Office EDP file on
The European Patent Office is in no way liable for these particulars which are merely given for the purpose of information.

26-01-2015

| Patent document cited in search report | | Publication date | Patent family member(s) | | | Publication date |
|---|---|---|---|---|---|---|
| US 2001049086 | A1 | 06-12-2001 | AT | 387704 | T | 15-03-2008 |
| | | | AU | 4931801 | A | 03-10-2001 |
| | | | CA | 2402725 | A1 | 27-09-2001 |
| | | | EP | 1292941 | A1 | 19-03-2003 |
| | | | JP | 4834821 | B2 | 14-12-2011 |
| | | | JP | 2003529791 | A | 07-10-2003 |
| | | | US | 2001049086 | A1 | 06-12-2001 |
| | | | WO | 0171706 | A1 | 27-09-2001 |
| US 2007044641 | A1 | 01-03-2007 | CN | 1748242 | A | 15-03-2006 |
| | | | EP | 1595243 | A2 | 16-11-2005 |
| | | | JP | 2006517679 | A | 27-07-2006 |
| | | | KR | 20050107425 | A | 11-11-2005 |
| | | | US | 2007044641 | A1 | 01-03-2007 |
| | | | WO | 2004072767 | A2 | 26-08-2004 |
| US 2009173216 | A1 | 09-07-2009 | DE | 102006008260 | B3 | 05-07-2007 |
| | | | EP | 1987510 | A1 | 05-11-2008 |
| | | | JP | 2009527779 | A | 30-07-2009 |
| | | | KR | 20090006063 | A | 14-01-2009 |
| | | | US | 2009173216 | A1 | 09-07-2009 |
| | | | WO | 2007096035 | A1 | 30-08-2007 |
| US 2008236371 | A1 | 02-10-2008 | NONE | | | |
| US 7227072 | B1 | 05-06-2007 | NONE | | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012052157 W

**Non-patent literature cited in the description**

- **BELLO, J.P. ; DAUDET, L. ; ABDALLAH, S. ; DUXBURY, C. ; DAVIES, M. ; SANDLER, MARK B.** A Tutorial on Onset Detection in Music Signals. *Speech and Audio Processing, IEEE Transactions on,* September 2005, vol. 13 (5), 1035, , 1047
- **ERONEN, A. ; KLAPURI, A.** Music Tempo Estimation with k-NN regression. *IEEE Trans. Audio, Speech and Language Processing,* January 2010, vol. 18 (1
- **KLAPURI, A. ; ERONEN, A. ; ASTOLA, J.** Analysis of the meter of acoustic musical signals. *IEEE Trans. Audio, Speech, and Language Processing,* 2006, vol. 14 (1
- **D. ELLIS.** Beat Tracking by Dynamic Programming. *J. New Music Research, Special Issue on Beat and Tempo Extraction,* March 2007, vol. 36 (1), 51-60
- **PAULUS, J. ; KLAPURI, A.** Music Structure Analysis Using a Probabilistic Fitness Measure and a Greedy Search Algorithm. *IEEE Transactions on Audio, Speech, and Language Processing,* August 2009, vol. 17 (6), 1159-1170